# EUROPÄISCHE PATENTSCHRIFT

(11) **EP 3 822 688 B1**
(45) Veröffentlichungstag und Bekanntmachung des Hinweises auf die Patenterteilung: **12.11.2025**
(21) Anmeldenummer: 20207271.6
(22) Anmeldetag: 12.11.2020
(51) Int. Cl.: G02B 23/02, G02B 23/18

(54) **FERNROHR MIT ZWEI TUBEN MIT TAILLE**
TELESCOPE WITH TWO TUBES WITH COLLAR
LUNETTE POURVUE DE DEUX TUBES À COL

(30) Priorität: 15.11.2019 AT 509932019
(43) Veröffentlichungstag der Anmeldung: 19.05.2021
(73) Patentinhaber: Swarovski-Optik AG & Co KG., 6067 Absam (AT)
(72) Erfinder: ÖTTL, Peter, 6068 Mils (AT)
(74) Vertreter: Burger, Hannes

(56) Entgegenhaltungen:
- EP-A2- 2 085 746
- US-A- 2 421 805
- NIKON: "2018 Sport Optics Catalogue", 1 January 2018 (2018-01-01), pages 1 - 16, XP055787617, Retrieved from the Internet <URL:https://cdn-10.nikon-cdn.com/SRO_CA/2018-Full-Line-Catalog/2018-Nikon-Sport-Optics-Catalogue.pdf> [retrieved on 20210319]
- BRESSER GMBH: "Sportoptik | Sport Optics", 1 January 2018 (2018-01-01), pages 1 - 52, XP055787718, Retrieved from the Internet <URL:http://catalog.bresser.de/books/vacu/mobile/index.html#p=1>

## Beschreibung

Die Erfindung betrifft ein binokulares Fernrohr mit zwei Tuben, die zur Einstellung des Augenabstands durch eine um eine Gelenkachse schwenkbare Gelenkbrücke miteinander verbunden sind, wobei in den beiden Tuben jeweils ein Strahlengang mit einer ersten optischen Achse eines Objektivs, mit einer zweiten optischen Achse eines Okulars und mit einem Prismen-Umkehrsystem ausgebildet ist, wobei die erste optische Achse des Objektivs und die zweite optische Achse des Okulars um einen Abstand zueinander parallel versetzt sind, sodass diese Achsen nicht zusammenfallen.

Herkömmliche Fernrohre der oben genannten Art haben den Nachteil, dass sie oftmals unhandlich in der Bedienung sind, da sie üblicherweise in einem Bereich, in dem ein Benutzer das Fernrohr während einer Benutzung hält bauartbedingt, einen relativ großen Durchmesser aufweisen.

Der Katalog "2018 Sport Optics Catalogue" (Nikon) zeigt binokulare Fernrohre mit der Modellbezeichnung "PROSTAFF 7S" und "PROSTAFF 5", wobei deren zwei Tuben durch eine Gelenkbrücke miteinander verbunden sind. Die Tuben weisen jeweils an ihrer der Gelenkbrücke abgewandten Außenseite (an der linken und rechten Seite des binokularen Fernrohrs) eine Haltemulde zur seitlichen Anlage der Handfläche eines Benutzers auf.

In dem Dokument EP 2 085 746 A2 wird ein binokulares Beobachtungsgerät mit einem integrierten Laser-Entfernungsmesser und einer opto-elektronischen Anzeige beschrieben. Dabei sind die beiden Beobachtungsteile (Tuben) um eine zentrale Gelenkachse relativ zueinander schwenkbar. Die Beobachtungsteile weisen eine annähernd tubusartige Grundform auf, wobei außerdem an einer Unterseite eine kielartig ausgeformte Gehäuseerweiterung zur Aufnahme der Vorrichtungselektronik ausgebildet ist. An die Gehäuseerweiterung anschließend ist an dem dem Okular zugewandten Bereich der Beobachtungsteile eine Daumenvertiefung vorgesehen.

In dem Katalog "Sportoptik | Sport Optics" (Bresser) wird neben diversen anderen binokularen Fernrohren auch das Modell "Spezial-Jagd 1540963 9x63 DK" gezeigt. Dabei weist die Gummiarmierung der beiden Tuben an deren Oberseite jeweils drei über den im Wesentlichen kreisförmigem Querschnitt der Tuben vorstehende Wülste auf.

Es ist daher eine Aufgabe der Erfindung, ein Fernrohr mit verbesserter Ergonomie zu schaffen.

Diese Aufgabe wird mit einem Fernrohr der eingangs genannten Art erfindungsgemäß durch ein binokulares Fernrohr gemäß Anspruch 1 gelöst.

Durch die erfindungsgemäße Lösung wird eine sehr gute Handhabbarkeit des Fernohres erzielt und auch eine Ermüdung der Hände auch bei längerem Halten des Fernrohres reduziert, wodurch der Bedienungskomfort deutlich erhöht wird.

Gemäß einer bevorzugten Ausführungsform der Erfindung kann es vorgesehen sein, dass eine Projektion der optischen Achse in eine, einen auf der Oberseite oder in eine, einen auf der Unterseite verlaufenden Abschnitt der Taille enthaltende Ebene mit dem in der dieser Ebene verlaufenden Abschnitt der Taille einen spitzen Winkel zwischen 35° und 90° einschließt.

Eine vorteilhafte Weiterbildung besteht darin, dass die erste optische Achse des Objektivs und die zweite optische Achse des Okulars um einen Abstand zueinander parallel versetzt sind, sodass diese Achsen nicht zusammenfallen, wobei die erste optische Achse des Objektivs und die zweite optische Achse des Okulars sowie die Gelenkachse in einer gemeinsamen Ebene liegen.

Die Außenseiten der beiden Tuben können jeweils die Taille im Bereich des Prismen-Umkehrsystems in einer bezüglich der Ebene senkrechten Richtung aufweisen.

Weiters kann ein Querschnitt normal zur ersten Ebene und zur Richtung der optischen Achse durch jeden der Tuben im Bereich der Taille seine schmalste Stelle in einem Schnittbereich des jeweiligen Tubus mit einer normal zur Richtung der ersten optischen Achse des Objektivs verlaufenden Ebene aufweisen, wobei ein Verhältnis eines Durchmessers der schmalsten Stelle des Tubus normal zur ersten Ebene zu einem Durchmesser des Gehäuses im Bereich des Objektivs einen Wert von unter 80%, insbesondere zwischen 60 % und 80 % aufweist, bzw. das Verhältnis einen Wert hat, der kleiner ist als 0,80, insbesondere einen Wert hat, der zwischen 0,60 und 0,80 liegt.

Vorteilhaft ist auch eine Ausbildung des Fernrohrs, wobei ein Verhältnis aus einer Differenz eines Durchmessers eines im Bereich des Objektivs die Außenseite des Tubus umschreibend gedachten Zylindermantels und eines senkrecht bezüglich der Ebene gemessenen Durchmessers der Taille zu einem maximalen freien Durchmesser des Objektivs einen Wert hat, der größer ist als 0,20, vorzugsweise das Verhältnis einen Wert hat, der in einem Bereich zwischen 0,30 und 0,60 liegt.

Zur Verbesserung der Ergonomie kann jede Haltemulde quer zur Längsrichtung der Taille jeweils einen konkaven Querschnitt aufweisen.

Zudem kann eine Richtung einer Längserstreckung jeder Haltemulde schräg zu einer Richtung einer Längserstreckung des Tubus verlaufen.

Bevorzugt ist es vorgesehen, dass jede Haltemulde jedes Tubus einen ersten, dem Okular näher liegenden okularseitigen Endbereich und einen zweiten, dem Objektiv näherliegenden objektivseitigen Endbereich aufweist, wobei der Abstand zwischen den jeweiligen okularseitigen, ersten Endbereichen der Haltemulden der beiden Tuben kleiner ist als der Abstand zwischen den jeweiligen objektivseitigen, zweiten Endbereichen der konkaven Abschnitte der beiden Tuben.

Darüber hinaus kann jeder Tubus im Bereich seiner Taille zwei einander gegenüberliegende, insbesondere diametral gegenüberliegende, Haltemulden aufweisen.

Eine bevorzugte Variante der Erfindung besteht darin, dass die Haltemulden der beiden Tuben V-förmig aufeinander zulaufen, wobei eine Haltemulde eines ersten der beiden Tuben einen ersten Schenkel des "V" und eine Haltemulde eines zweiten der beiden Tuben einen zweiten Schenkel des "V" bildet.

In den beiden Tuben kann jeweils ein axial verschiebbares Fokussiermittel angeordnet sein, wobei eine gemeinsamen Fokussiervorrichtung zum Verschieben der Fokussiermittel ausgebildet ist, wobei die Fokussiervorrichtung einen um eine Drehachse drehbaren Fokussierknopf umfasst.

Eine Weiterbildung, die sich durch eine besonders einfache Bedienung des Fokussierelements auszeichnet, besteht darin, dass eine Spitze des "V" im Bereich des Fokussierknopfes liegt, oder dass eine gedachte, eine Orientierung der Haltemulden beibehaltenden Verlängerung der Längserstreckungen der Haltemulden durch den Fokussierknopf verläuft, oder dass der Fokussierknopf zwischen einer gedachten, die Orientierung der Haltemulden beibehaltenden Verlängerung der Längserstreckungen angeordnet ist.

Gemäß einer in ergonomischer Hinsicht sehr vorteilhaften Ausführungsform weist ein Querschnitt normal zur ersten Ebene und zur Richtung der optischen Achse durch jeden der Tuben im Bereich seiner Taille seine breiteste Stelle in einem Schnittbereich des Tubus mit der ersten Ebene auf.

Eine hinsichtlich des benötigten Einbauraums besonders günstige Variante sieht vor, dass eine Spitze einer Dachkante des Prismen-Umkehrsystems in Bereich der breitesten Stelle und nach außen weisend angeordnet ist, wobei der kürzeste Abstand zwischen Spitze der Dachkante und Innenwand des Tubus kleiner ist als der kürzeste Abstand zwischen Spitze der Dachkante und einer der Spitze der Dachkante gegenüberliegenden Fläche des Prismen-Umkehrsystems.

Gemäß einer bevorzugten Ausführungsform der Erfindung verläuft eine durch die Haltemulde an der Oberseite des Tubus und eine durch die Haltemulde an der Unterseite des Tubus verlaufende zweite Ebene durch das Prismen-Umkehrsystem.

Hinsichtlich einer besonders kompakten Bauweise hat es sich als vorteilhaft erwiesen, dass das Prismen-Umkehrsystem ein Schmidt-Pechan-Prismensystem umfasst.

Zum besseren Verständnis der Erfindung wird diese anhand der in den nachfolgenden Figuren dargestellten, nicht einschränkenden Ausführungsbeispiele näher erläutert.

Es zeigen jeweils in stark vereinfachter, schematischer Darstellung:
- Fig. 1: eine perspektivische Ansicht eines binokularen Fernrohrs;
- Fig. 2: das binokulare Fernrohr aus Fig. 1 in einer perspektivischen Darstellung von schräg unten;
- Fig. 3: ein optisches System des Fernrohrs aus Fig. 1;
- Fig. 4: einen Längsschnitt der Fokussiervorrichtung des Fernrohrs aus Fig. 1;
- Fig. 5: einen Querschnitt der Fokussiervorrichtung aus Fig. 4;
- Fig. 6: einen Schnitt entlang der Linie VI-VI in Fig. 5;
- Fig. 7: ein Detail einer Vorrichtung zur Begrenzung der Drehbewegung des Fokussierknopfs;
- Fig. 8: ein Detail der Fokussiervorrichtung aus Fig. 4 in perspektivischer Darstellung und teilweise als Explosionszeichnung;
- Fig. 9: Teile des Fernrohrs aus Fig. 1 in einer Frontalansicht von der Objektseite her betrachtet;
- Fig. 10: einen Querschnitt durch einen ersten Tubus des Fernrohres aus Fig.1 entlang der Linie A-A in Fig. 9;
- Fig. 11: einen Querschnitt durch den ersten Tubus des Fernrohres aus Fig. 1 entlang der Linie B-B in Fig. 9;
- Fig. 12: einen Schnitt entlang der Linie D-D in Fig. 9;
- Fig. 13: einen durch einen ersten Tubus des Fernrohres aus Fig.1 entlang der Linie D-D in Fig. 9;
- Fig. 14: einen Längsschnitt durch eine Schubstange eines Fokussiergetriebes;
- Fig. 15: eine perspektivische Ansicht eines Tubus des Fernrohres aus Fig. 1;
- Fig. 16: einen Längsschnitt durch den Tubus aus Fig. 15;
- Fig. 17: einen Schnitt entlang der Linie IX-IX in Fig. 1;
- Fig. 18: ein Detail der Linsenfassung mit der Gelenkkopfanordnung der Schubstange gemäß Fig. 12, entsprechend einer Blickrichtung parallel zur Linie XIX-XIX wie in Fig. 9 angezeigt;
- Fig. 19: einen Querschnitt des Details entsprechend Fig. 18;
- Fig. 20: ein Detail des okularseitigen Endbereichs des binokularen Fernrohrs in Draufsicht;
- Fig. 21: das Detail des okularseitigen Endbereichs gemäß Fig. 20 teilweise geschnitten dargestellt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

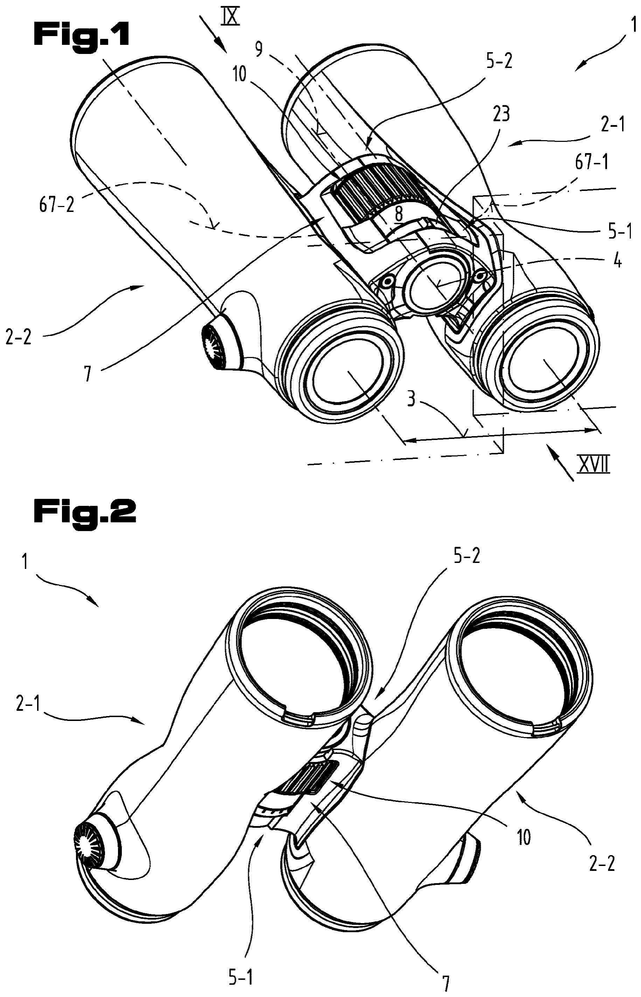

Die Fig. 1 zeigt ein Fernglas bzw. ein binokulares Fernrohr 1 perspektivisch dargestellt. Dieses umfasst einen ersten Tubus 2-1 und einen zweiten Tubus 2-2 mit darin aufgenommenen optischen Systemen zur vergrößerten Darstellung eines entfernten Gegenstands. Zur Verbindung und parallelen Anordnung der beiden Tuben 2-1, 2-2 ist zwischen diesen eine Gelenkbrücke 5 ausgebildet. Gemäß diesem Ausführungsbeispiel des binokularen Fernrohres 1 ist eine erste Gelenkbrücke 5-1 und eine davon in Längsrichtung distanzierte zweite Gelenkbrücke 5-2 mit einer gemeinsamen Gelenkachse 4 vorgesehen. Somit können die beiden Tuben 2 um diese Gelenkachse 4 gegeneinander verschwenkt werden und kann auf diese Weise der Pupillenabstand bzw. der Augenabstand 3 für unterschiedliche Benutzer eingestellt werden.

Zum Scharfstellen der Abbildung durch die beiden optischen Systeme in den beiden Tuben 2-1, 2-2 ist eine Fokussiervorrichtung 7 vorgesehen, die zwischen der ersten Gelenkbrücke 5-1 und der zweiten Gelenkbrücke 5-2 angeordnet ist. Die Fokussiervorrichtung 7 umfasst ihrerseits ein Gehäuse 8 und einen Fokussierknopf 10 mit einer Drehachse 9. Die Drehachse 9 des Fokussierknopfs 10 ist dabei koaxial zu der Gelenkachse 4 der Gelenkbrücken 5-1, 5-2 angeordnet. Die Fokussiervorrichtung 7 umfasst außerdem einen Dioptriering 23. Dieser ist ebenfalls um die Drehachse 9 verschwenkbar.

Die Fig. 2 zeigt das binokulare Fernrohr 1 gemäß Fig. 1 in einer perspektivischen Darstellung von schräg unten. Der mit einem gerändelten Mantel ausgebildete Fokussierknopf 10 ist sowohl von einer Oberseite (Fig. 1) als auch von einer Unterseite (Fig. 2) des binokularen Fernrohrs 1 zugänglich. Somit ist es einem Benutzer möglich, bei Ergreifen eines der beiden Tuben 2-1, 2-2 einen solchen mit seiner Hand zu umschließen und dabei gleichzeitig auf den Fokussierknopf 10 mit seinen Fingern sowohl von der Unterseite als auch von der Oberseite einzuwirken.

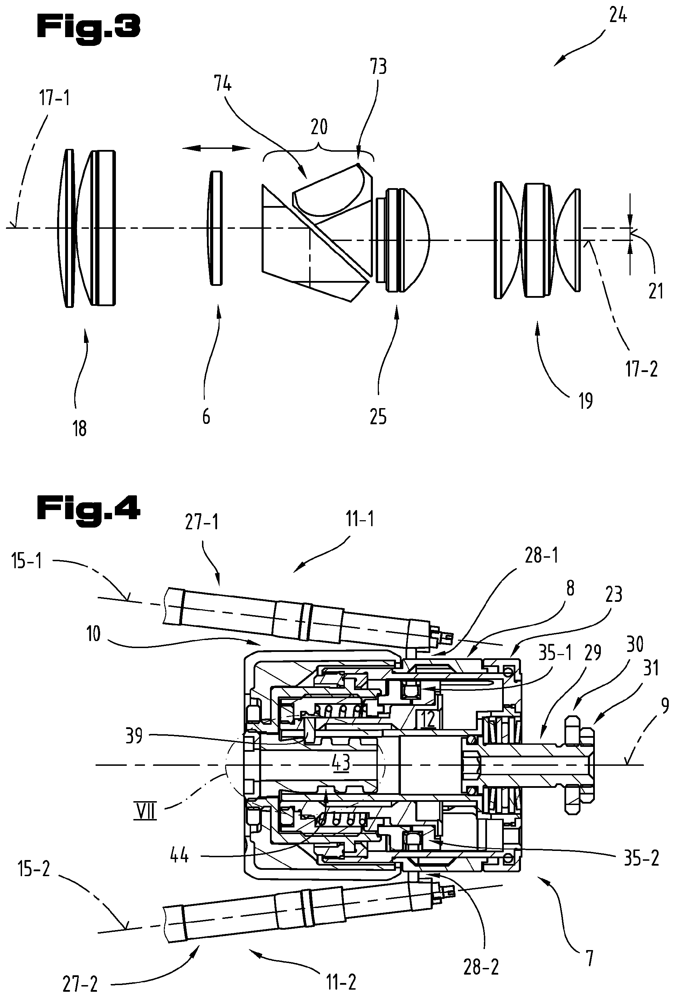

Die Fig. 3 zeigt exemplarisch ein optisches System 24 der beiden Tuben 2-1, 2-2 des binokularen Fernrohrs 1.

In objektseitig (linke Seite in Fig. 3) beginnender Reihenfolge umfasst das optische System 24 eine Objektivlinse 18, eine Fokussierlinse 6, ein Prismen-Umkehrsystem 20, eine Feldlinse 25 und eine Okularlinse 19. Insofern hier und auch in weiterer Folge vereinfachend der Begriff "Linse" verwendet wird, sei zur Klarstellung angemerkt, dass es sich dabei gegebenenfalls auch jeweils um ein System von mehreren Einzellinsen handelt. Das Prismen-Umkehrsystem 20 umfasst ein Umkehrprisma vom Typ eines Schmidt-Pechan-Prismas. An dieser Stelle sei darauf hingewiesen, dass anstelle eines Schmidt-Pechan-Prismas auch andere Prismen-Umkehrsysteme, wie ein Abbe-König-Prisma oder ein Uppendahl-Prisma verwendet werden könnte.

Gemäß diesem Ausführungsbeispiel ist das Prismen-Umkehrsystem 20 derart dimensioniert, dass zwischen einer ersten optischen Achse 17-1 der Objektivlinse 18 und einer zweiten optischen Achse 17-2 der Okularlinse 19 eine Parallelversetzung um einen Abstand 21 ausgebildet ist. Das optische System 24 der beiden Tuben 2-1, 2-2 des Fernrohrs 1 weist eine sogenannte Innenfokussierung auf. Dabei wird zum Scharfstellen des Bildes die innenliegende Fokussierlinse 6 in axialer Richtung der optischen Achse 17-1, 17-2 verschoben, wobei die Drehbewegung des Fokussierknopfs 10 über ein Fokussiergetriebe 11 (Fig. 4) in eine Längsbewegung und entsprechende Verschiebung der Fokussierlinse 6 umgewandelt wird.

Die Fig. 4 zeigt einen Längsschnitt der Fokussiervorrichtung 7 des Fernrohrs 1 im Detail mit Teilen des zu den beiden Fokussierlinsen 6 (Fig. 3) führenden Fokussiergetriebes 11-1, 11-2. Die Fokussiervorrichtung 7 weist als zentrale Elemente das Gehäuse 8 und den um die Drehachse 9 drehbar gelagerten Fokussierknopf 10 auf. Das Gehäuse 8 der Fokussiervorrichtung 7 ist dabei mit einem der beiden Tuben 2-1, 2-2 im Bereich der Gelenkbrücke 5-1 drehfest befestigt. Diese Befestigung des Gehäuses 8 der Fokussiervorrichtung 7 erfolgt gemeinsam an einer Gelenkachse 29 der Gelenkbrücke 5 der beiden Tuben 2. Die dazu dienende Achsmutter 30 und Kontermutter 31 sind ebenfalls in der Fig. 4 dargestellt. Im Inneren des Gehäuses 8 ist eine Gewindespindel 12 in axialer Richtung (Drehachse 9) verschiebbar angeordnet. Zur Übertragung der axialen Stellbewegung der Gewindespindel 12 an die Fokussierlinse 6 bzw. die Linsenfassung 26 der Fokussierlinse 6 weist die Fokussiervorrichtung 7 jeweils eine Schubstange 27 auf. Ein an einem okularseitigen Endbereich der Schubstange 27 befestigter Mitnehmer 28 steht dazu mit der Gewindespindel 12 in Eingriff.

Ein Ende der Schubstange 27 kann in einem der Tuben 2-1, 2-2 und ein anderes Ende der Schubstange 27 in der Gelenkbrücke 5 angeordnet sein.

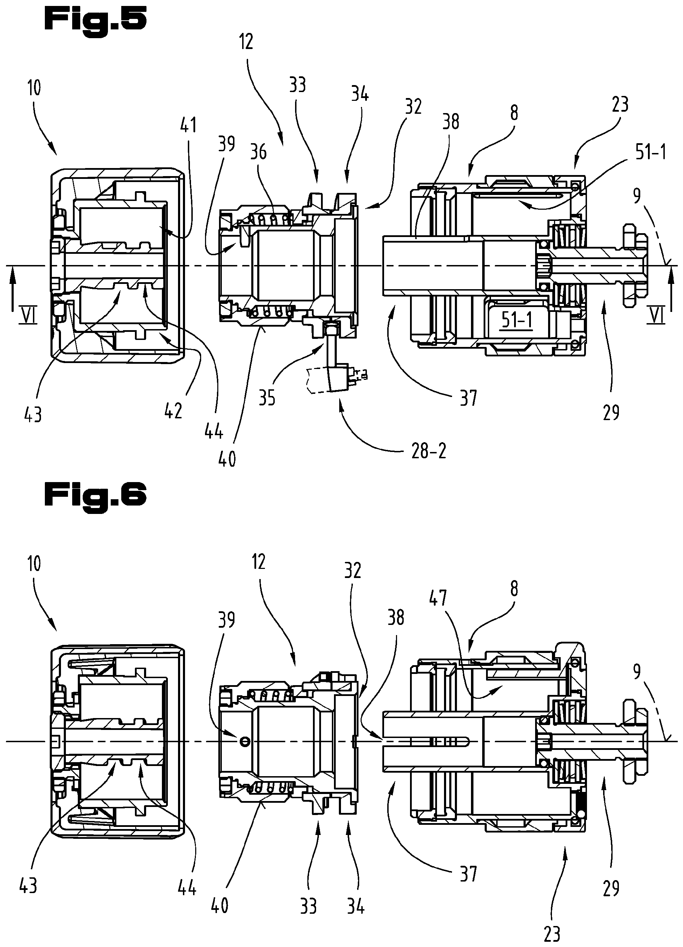

Die Fig. 5 zeigt den Querschnitt der Fokussiervorrichtung 7 gemäß Fig. 4, wobei dessen Gehäuse 8, die Gewindespindel 12 und der Fokussierknopf 10 in voneinander getrenntem Zustand bzw. in demontiertem Zustand dargestellt sind.

Die Gewindespindel 12 umfasst eine Innenhülse 32 mit einer vorderen Stellscheibe 33 und einer hinteren Stellscheibe 34. Zwischen einander zugewandte Stirnseiten der vorderen Stellscheibe 33 und der hinteren Stellscheibe 34 reicht ein Mitnehmerkopf 35 des Mitnehmers 28, wobei die vordere Stellscheibe 33 einerseits und die hintere Stellscheibe 34 an dem Mitnehmerkopf 35 zur Anlage kommen und derart eine axiale Verschiebung der Gewindespindel 12 in eine entsprechende Bewegung der Schubstangen 27-1, 27-2 umgewandelt wird.

Für die Befestigung der vorderen Stellscheibe 33 und der hinteren Stellscheibe 34 an der Innenhülse 32 der Gewindespindel 12 ist vorgesehen, dass die beiden Stellscheiben 33, 34 an einem Zylindermantelabschnitt der Innenhülse 32 angeordnet sind, wobei die hintere Stellscheibe 34 an einer radial überstehenden Schulter der Innenhülse 32 zur Anlage kommt. Andererseits ist an der Innenhülse 32 eine durch eine Spiralfeder gebildete Druckfeder 36 befestigt, die in vorgespanntem Zustand die vordere Stellscheibe 33, den Mitnehmerkopf 35 und die hintere Stellscheibe 34 gegeneinander gedrückt hält.

Im Inneren des Gehäuses 8 der Fokussiervorrichtung 7 ist eine Achshülse 37 angeordnet und mit dem Gehäuse 8 verbunden. Diese Achshülse 37 der Fokussiervorrichtung 7 dient als Geradführung für die Gewindespindel 12. Dabei ist die Innenhülse 32 der Gewindespindel 12 an der Achshülse 37 des Gehäuses 8 in axialer Richtung verschiebbar.

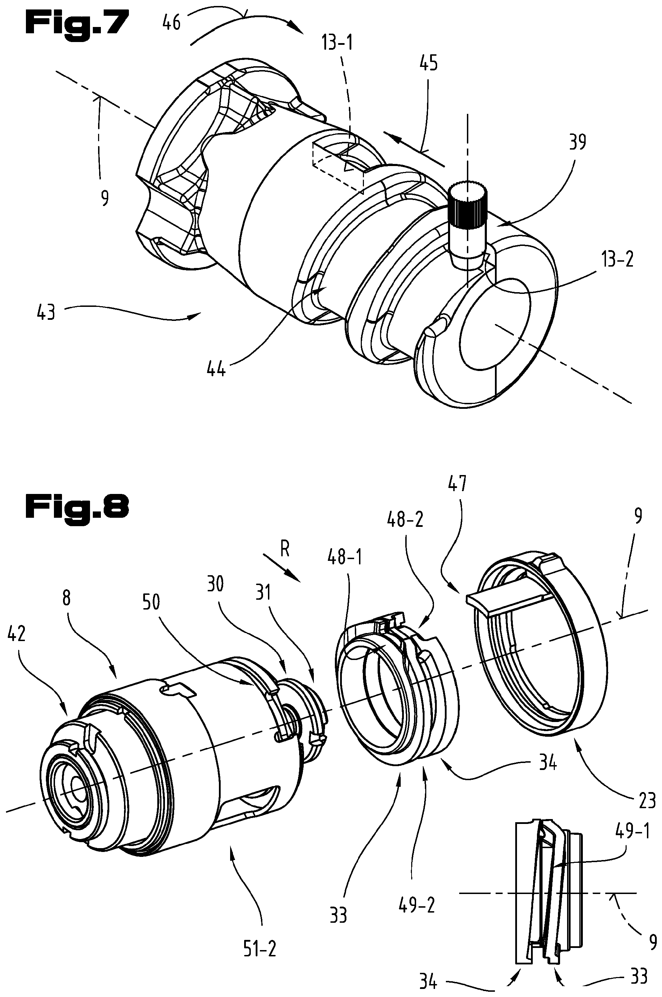

Zur Verschiebung der Gewindespindel 12 an der Achshülse 37 in Richtung der Drehachse 9 ist gemäß diesem Ausführungsbeispiel ein sich in Längsrichtung der Achshülse 37 erstreckender Schlitz 38 vorgesehen (Fig. 6). Und andererseits ist ein an einem inneren Umfang der Innenhülse 32 der Gewindespindel 12 nach innen vorstehender Führungsstift 39 angeordnet, der in den Schlitz 38 der Achshülse 37 eingreift. D.h. im zusammengebauten Zustand der Fokussiervorrichtung 7 reicht der Führungsstift 39 durch den Schlitz 38 der Achshülse 37 hindurch. Dadurch wird die Bewegung der Gewindespindel 12 auf eine Translation 45 in Richtung der Drehachse 9 beschränkt (Fig. 7). Damit durch Drehen des Fokussierknopfs 10 diese Translation 45 bewirkt werden kann, ist an einem äußeren Umfang der Gewindespindel 12 ein Gewinde 40 ausgebildet, an dem ein entsprechendes Innengewinde 41 einer Antriebsbuchse 42 des Fokussierknopfs 10 angreift.

Im zusammengebauten Zustand ist die Antriebsbuchse 42 des Fokussierknopfs 10 in dem Gehäuse 8 der Fokussiervorrichtung 7 drehbar gelagert. Der Fokussierknopf 10 ist somit gemäß diesem Ausführungsbeispiel in axialer Richtung (Drehachse 9) feststehend angeordnet. Ein Verdrehen des Fokussierknopfs 10 bewirkt somit eine axiale Verschiebung der Gewindespindel 12 mit den beiden Stellscheiben 33, 34, wodurch in weiterer Folge - über die Mitnehmer 28-1, 28-2 und die Schubstangen 27-1, 27-2 - die Fokussierlinsen 6 in Axialer Richtung verschoben werden (Fig. 3).

Die Fig. 6 zeigt den Fokussierknopf 10, die Gewindespindel 12 und das Gehäuse 8 der Fokussiervorrichtung 7 geschnitten dargestellt gemäß Fig. 5. Die Darstellung entspricht einer um 90° geschwenkten Blickrichtung. Deutlicher erkennbar ist dabei der sich in Längserstreckung der Achshülse 37 erstreckende Schlitz 38, in dem der Führungsstift 39 entlang gleitet. Der Schlitz 38 kann auch als Langloch ausgebildet sein.

Es ist bei dem beschriebenen Fernrohr 1 bzw. der Fokussiervorrichtung 7 vorgesehen, dass der Drehbereich bzw. der Drehwinkel des Fokussierknopfs 10 relativ zu dem Gehäuse 8 der Fokussiervorrichtung 7 an beiden Enden des Drehbereichs durch einen Anschlag begrenzt ist, wobei der Drehbereich mehr als 360° beträgt. Die Anschläge 13-1, 13-2 sind zueinander versetzt angeordnet. Beispielsweise können die Anschläge 13-1, 13-2 in Bezug auf eine Längsrichtung der Drehachse 9 oder um die Drehachse 9 zueinander versetzt sein.

Der Fokussierknopf 10 umfasst einen Anschlagbolzen bzw. ein Anschlagelement 43, das drehfest mit dem Fokussierknopf 10 verbunden ist. Im zusammengebauten Zustand vom Fokussierknopf 10 und Gehäuse 8 der Fokussiervorrichtung 7 erstreckt sich dieses Anschlagelement 43 im Inneren der Achshülse 37 des Gehäuses 8. Das Anschlagelement 43 ist, so wie auch die Achshülse 37, koaxial zu der gemeinsamen Drehachse 9 des Fokussierknopfs 10 angeordnet. In einer äußeren Zylindermantelseite des Anschlagelements 43 ist in diesem eine gewindegangartige Nut 44 ausgebildet bzw. eingeformt. Im zusammengebauten Zustand reicht der Führungsstift 39 der Innenhülse 32 der Gewindespindel 12 auch in die Nut 44 hinein (Fig. 4).

Die Fig. 7 zeigt ein Detail der Vorrichtung zur Begrenzung der Drehbewegung des Fokussierknopfs 10 in einer Endposition, gemäß Fig. 4, perspektivisch dargestellt. Aus Gründen der besseren Übersichtlichkeit sind dabei nur das Anschlagelement 43 des Fokussierknopfs 10 und der Führungsstift 39 der Gewindespindel 12 dargestellt.

Wie anhand der Fig. 5 und 6 ausgeführt, wird der Führungsstift 39 beim Verdrehen des Fokussierknopfs 10 in Richtung der Längserstreckung des Schlitzes 38 der Achshülse 37 (in Richtung der Drehachse 9) bewegt. Er führt also nur eine Translation 45 aus. Andererseits führt das Anschlagelement 43 beim Drehen des Fokussierknopfs 10 eine reine Rotationsbewegung 46 aus. Die Bewegung des Führungsstifts 39 relativ zu dem Anschlagelement 43 ist die einer Schraubbewegung, wobei der Führungsstift 39 sich in der schraubenlinienförmig ausgebildeten Nut 44 entlang bewegt. Dabei ist die Höhe einer Windung der Nut 44 gleich der Ganghöhe der miteinander in Eingriff stehenden Gewinde der Gewindespindel 12 und des Fokussierknopfs 10 (Gewinde 40, Innengewinde 41). Es ist vorgesehen, dass die Bogenlänge der Nut 44 (die Länge entsprechend einer Schraubenlinie) durch einen ersten Anschlag 13-1 und einen zweiten Anschlag 13-2 begrenzt ist. Diese Anschläge 13-1, 13-2 werden durch eine vordere bzw. eine hintere Innenwand der Nut 44 gebildet, wobei diese Innenwände vorzugsweise annähernd senkrecht bezüglich einer Richtung der Relativbewegung zwischen dem Führungsstift 39 und der Nut 44 ausgerichtet sind. Die Drehbewegung des Fokussierknopfs 10 findet demnach an einem genau definierten Drehwinkel ein Ende, und zwar wenn der vordere Anschlag 13-1 bzw. der hintere Anschlag 13-2 an dem Führungsstift 39 zur Anlage kommt. Die zweitgenannte Situation ist gerade jene, die in der Fig. 7 dargestellt ist, wobei der hintere Anschlag 13-2 an dem Führungsstift 39 anliegt.

In einer alternativen Ausführungsform der Vorrichtung zur Begrenzung der Drehbewegung des Fokussierknopfs 10 sind die beiden Anschläge 13-1, 13-2 an dem Anschlagelement 43 durch für sich eigenständige Anschlagkörper, die von einer äußeren Zylindermantelseite des Anschlagelements 43 radial abstehen, gebildet. Eine solche alternative Ausbildung des Anschlagelements 43 erfordert zu dessen Herstellung dementsprechend auch weniger Material.

Die so erreichte Begrenzung der Drehbewegung bzw. des erreichbaren Drehwinkels des Fokussierknopfs 10 verhindert in besonders vorteilhafter Weise ein Verklemmen der miteinander in Eingriff stehenden Gewinde 40, 41. Durch die Ausbildung der Nut 44 an dem Anschlagelement 43 mit einer vorgewählten Bogenlänge ist auf diese Weise ein in seinen Endlagen genau definierter Drehwinkelbereich für die Verstellung des Fokussierknopfs 10 und somit auch der Verstellbereich der Fokussierlinsen 6 genau vorgebbar. Ein unbeabsichtigtes Verklemmen der Fokussiervorrichtung 7, wie es dem Festziehen einer Schraubverbindung gleichkommen würde, kann dadurch verhindert werden.

Anhand der Darstellungen in den Fig. 5, 6 und der Fig. 8 wird nachfolgend die Ausbildung einer Einrichtung zum Dioptrienausgleich an der Fokussiervorrichtung 7 des Fernrohrs 1 beschrieben. Die Fig. 8 zeigt ein Detail der Fokussiervorrichtung 7 (Fig. 4) in perspektivischer Darstellung und teilweise als Explosionszeichnung dargestellt. An einem okularseitigen Endbereich ist an dem Gehäuse 8 der Dioptriering 23 bezüglich der Drehachse 9 verschwenkbar gelagert (Fig. 5, 6).

Wie bereits in Zusammenhang mit der Beschreibung der Fig. 5 erwähnt worden ist, sind die beiden Stellscheiben 33, 34 an einem Zylindermantelabschnitt der Innenhülse 32 der Gewindespindel 12 angeordnet. Entsprechend ihrer Befestigung sind die beiden Stellscheiben 33, 34 aber auch an der Innenhülse 32 in Bezug auf die Drehachse 9 verschwenkbar, wobei dieses Verschwenken durch Betätigen des Dioptrierings 23 bewirkt werden kann. Wie an der Darstellung in Fig. 8 deutlich zu erkennen ist, weist der Dioptriering 23 nämlich einen Mitnehmerarm 47 auf. Der Mitnehmerarm 47 erstreckt sich, von dem ringförmigen Abschnitt des Dioptrierings 23 abstehend, parallel zu der Drehachse 9 in objektivseitiger Richtung hin. Dem Querschnitt des Mitnehmerarms 47 entsprechend weisen die Stellscheiben 33, 34 an ihrem Umfang Ausnehmungen 48-1, 48-2 auf. Indem der Mitnehmerarm 47 des Dioptrierings 23 in die Ausnehmungen 48-1, 48-2 der Stellscheiben 33, 34 eingreift, können diese durch Betätigen des Dioptrierings 23 bezüglich der Drehachse 9 verschwenkt werden.

Wie vorstehend anhand der Beschreibung der Fig. 5 und 6 ebenfalls bereits ausgeführt wurde, wird jeweils ein Mitnehmerkopf 35 der Mitnehmer 28 der beiden Schubstangen 27-1, 27-2 zwischen einander zugewandten Stirnseiten der vorderen Stellscheibe 33 und der hinteren Stellscheibe 34 liegend mitgeführt und erfolgt auf diese Weise bei einer axialen Verschiebung der Gewindespindel 12 eine dementsprechende Verschiebung der Fokussierlinsen 6. Unabhängig von einer axialen Verschiebung der Gewindespindel 12 kann nun auch durch ein Verschwenken des Dioptrierings 23 eine zusätzliche Verschiebung einer der beiden Fokussierlinsen 6 erreicht werden. Dazu sind Abschnitte bzw. Teilbereiche der mit den Mitnehmerköpfen 35 in Kontakt tretenden Stirnseiten der beiden Stellscheiben 33, 34 unterschiedlich verlaufend ausgebildet. Und zwar sind bei einem der beiden Teilbereiche kreisringförmige Seiten vorgesehen, während bei dem anderen Teilbereich gewindeartig bzw. schraubenlinienförmig verlaufende Seiten vorgesehen sind. Dementsprechend sind in einem ersten Teilbereich eine schraubenlinienförmig verlaufende erste Führungsbahn 49-1 und in einem zweiten Teilbereich eine kreislinienförmige zweite Führungsbahn 49-2 durch die beiden Stellscheiben 33, 34 ausgebildet.

Zur Verdeutlichung dessen ist in der Fig. 8 die Anordnung der beiden Stellscheiben 33, 34 auch von der Rückseite, das heißt in einer Seitenansicht gekennzeichnet mit "R" dargestellt. Gemäß dieser Ausbildung der beiden Stellscheiben 33, 34 erfolgt bei einer Betätigung des Dioptrierings 23 eine zusätzliche Verschiebung der Fokussierlinse 6 des ersten Tubus 2-1 (gewindeartig verlaufende Führungsbahn 49-1). Das Verschwenken der Anordnung der beiden Stellscheiben 33, 34 beim Betätigen des Dioptrierings 23 bewirkt jedoch keine Verschiebung der Fokussierlinse 6 des zweiten Tubus 2-2 (kreisbogenförmig verlaufende zweite Führungsbahn 49-2).

Im Übrigen ist zu der konstruktiven Gestaltung des Dioptrierings 23 anzumerken, dass dessen ringförmiger Abschnitt am äußeren Umfang des Gehäuses 8 der Fokussiervorrichtung 7 angeordnet ist. Der Mitnehmerarm 47 des Dioptrierings 23 reicht, um mit den Ausnehmungen 48-1, 48-2 an den Stellscheiben 33, 34 zusammenwirken zu können, in den Innenraum des zylindermantelförmig ausgebildeten Gehäuses 8. Wie deutlicher im Querschnitt gemäß Fig. 6 zu erkennen ist, weist dazu der Mitnehmerarm 47 einen radial verlaufenden Abschnitt auf, mit dem er mit dem ringförmigen Abschnitt des Dioptrierings 23 verbunden ist. Das Gehäuse 8 der Fokussiervorrichtung 7 weist dazu im okularseitigen Endbereich seines zylindermantelförmigen Abschnitts einen über einen Teilbereich des Umfangs verlaufenden Schlitz 50 auf, durch den der Mitnehmerarm 47 hindurchreicht (Fig. 8).

In dem zylindermantelförmigen Abschnitt des Gehäuses 8 sind außerdem ein erstes Fenster 51-1 und ein zweites Fenster 51-2 ausgebildet (Fig. 5, 8), durch die hindurch sich jeweils einer der beiden Mitnehmer 28-1, 28-2 des Fokussiergetriebes 11 erstreckt. Somit können die Mitnehmerköpfe 35-1, 35-2 der Mitnehmer 28-1, 28-2 in die Stellscheiben 33, 34 eingreifen und eine axiale Verschiebung auf die Schubstangen 27-1, 27-2 übertragen (Fig. 4).

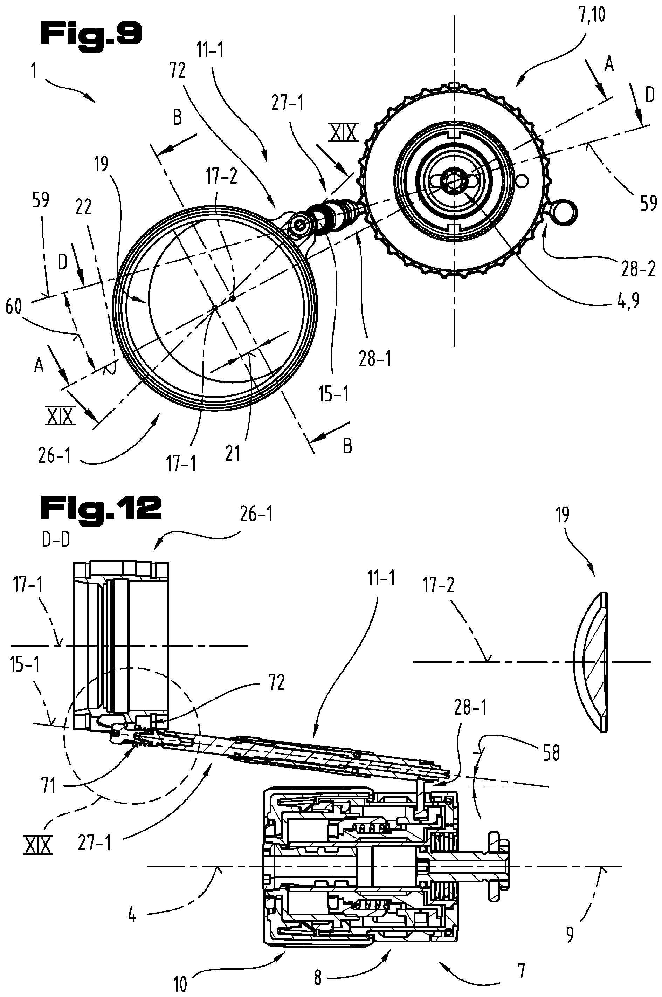

Die Fig. 9 zeigt eine Darstellung von Teilen des binokularen Fernrohrs 1 in einer Frontalansicht von der Objektseite her betrachtet in einer parallel zu der Gelenkachse 4 gerichteten Blickrichtung. Von dem binokularen Fernrohr 1 sind nur die Fokussiervorrichtung 7 (erkennbar an dem Fokussierknopf 10 und das Fokussiergetriebe 11-1) mit den Mitnehmer 28-1, der Schubstange 27-1 und der Linsenfassung 26-1 der Fokussierlinse 6 des ersten Tubus 2-1 dargestellt. Zusätzlich ist noch eine der Linsen des Okulars 19 wiedergegeben. Die zu der Gelenkachse 4 bzw. der Drehachse 9 parallelen optischen Achsen, das heißt die erste optische Achse 17-1 des Objektivs 18 und die zweite optische Achse 17-2 des Okulars 19, erscheinen in dieser Darstellung jeweils als Punkt in der Zeichenebene (projizierend). Wie in der Beschreibung der Fig. 3 bereits erwähnt, sind die erste optische Achse 17-1 des Objektivs 18 und die zweite optische Achse 17-2 des Okulars 19 um den Abstand 21 zueinander parallel versetzt.

Es ist vorgesehen, dass die erste optische Achse 17-1 des Objektivs 18, die zweite optische Achse 17-2 des Okulars 19 und die Gelenkachse 4 der Gelenkbrücke 5 in einer gemeinsamen Ebene 22 liegen. Dies ist in analoger Weise auch bei der Anordnung des optischen Systems 24 in dem - symmetrisch zu dem ersten Tubus 2-1 angeordneten - zweiten Tubus 2-2 der Fall.

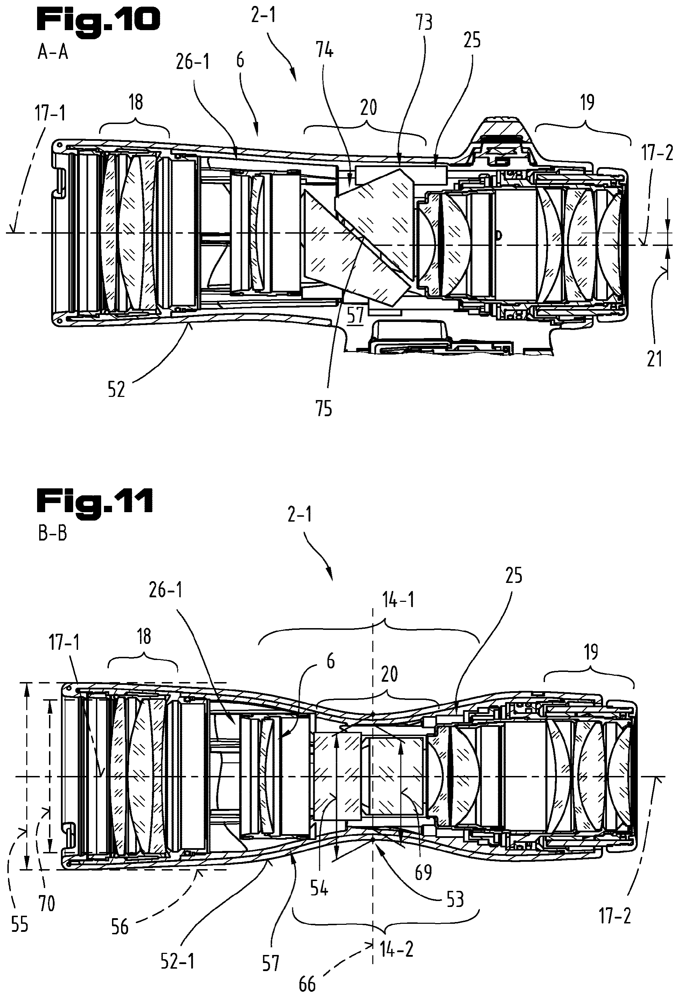

In der Fig. 10 ist ein Querschnitt durch den ersten Tubus 2-1 bezüglich einer durch die Ebene 22 (Fig. 9) gebildeten Schnittebene dargestellt. Das heißt die Darstellung entspricht einer Blickrichtung senkrecht auf die die erste optische Achse 17-1 des Objektivs 18, die zweite optische Achse 17-2 des Okulars 19 und die Gelenkachse 4 enthaltende Ebene 22. Die Ausrichtung des Prismen-Umkehrsystems 20 in Fig. 10 entspricht jener wie schon in Fig. 3 dargestellt. Ebenso erscheint auch der Abstand 21 zwischen der ersten optischen Achse 17-1 des Objektivs 18 und der zweiten optischen Achse 17-2 des Okulars 19 in der Figur unverzerrt.

Die Fig. 11 zeigt einen Querschnitt des ersten Tubus 2-1 bezüglich einer die zweite optische Achse 17-2 des Okulars 19 enthaltenden und zu der Ebene 22 senkrechten Schnittebene "B-B" (Fig. 9). Wie diese Darstellung des Tubus 2-1 zeigt, weist eine Außenseite 52-1 eines Tubusgehäuses 57 im Bereich des Prismen-Umkehrsystems 20 eine Taille 53 auf.

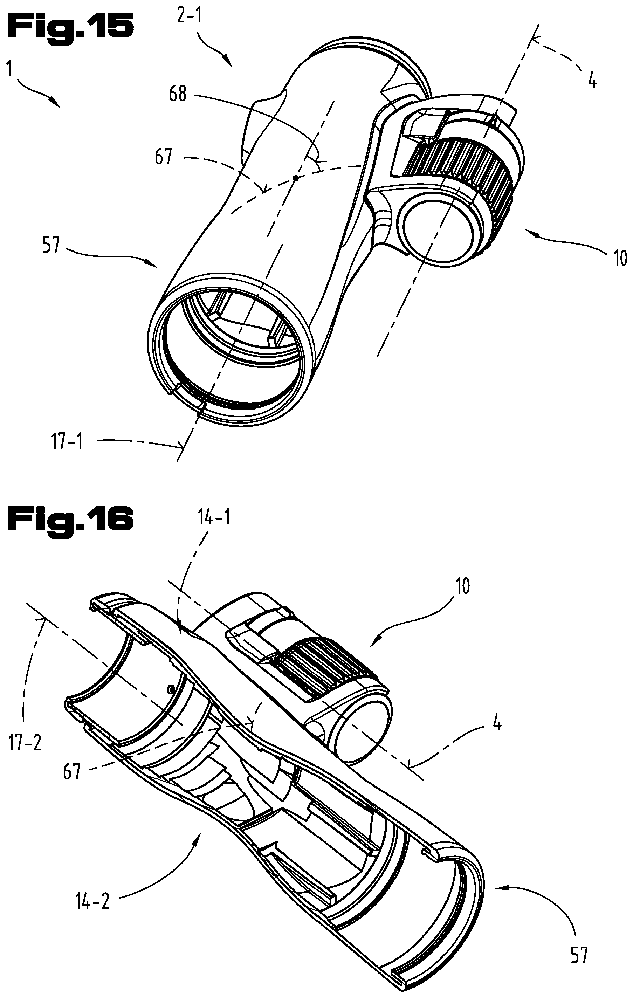

Die Taille 53 ist mit einer von einer Kreisform abweichenden Umfangsform ausgebildet. Ein an einer Oberseite des Tubus 2-1 verlaufender Abschnitt ist als eine der Taille 53 folgende Haltemulde 14-1 für einen Abschnitt eines Fingers ausgebildet, wie dies in Fig. 15 und 16 dargestellt ist. Ein an einer Unterseite des Tubus 2-1 verlaufender Abschnitt ist als eine der Taille 53 folgende Haltemulde 14-2 für einen Abschnitt eines Daumens eines Benutzers ausgebildet.

Eine durch die Haltemulde 14-1 an der Oberseite des Tubus 2-1 und eine durch die Haltemulde 14-2 an der Unterseite des Tubus 2-1 verlaufende Ebene 66 verläuft durch das Prismen-Umkehrsystem 20 bzw. schneidet dieses.

Wie auch aus Fig. 15 und 16 ersichtlich ist, kann jede Haltemulde 14-1, 14-2 quer zur Längsrichtung der Taille 53 einen konkaven Querschnitt aufweisen.

Eine Längsrichtung 67 jeder Haltemulde 14-1, 14-2 kann schräg zu einer Längserstreckung des Tubus 2-1 (optische Achsen 17-1, 17-2) verlaufen. Weiters kann eine Längsrichtung 67-1 der auf der Oberseite verlaufenden Haltemulde 14-1 und/oder eine Längsrichtung 67-2 der auf der Unterseite verlaufenden Haltemulde 14-2 mit einer Richtung der Gelenkachse 4 zumindest einen Winkel 68 zwischen 35° und 90° einschließen. Unter Längsrichtung 67 einer Haltemulde 14 soll dabei die Richtung eines Verlaufs der Talsohle der Haltemulde 14 verstanden werden, wie er in den Fig. 15 und 16 durch strichlierte Linien angedeutet ist. D.h. die Folge der Punkte der lokalen Minima der Radialabstände von die optische Achse 17-1 bzw. 17-2 enthaltenden Schnittkurven durch die Außenseite 52 des Tubus-Gehäuse 57 kennzeichnet die Längsrichtung 67.

Weiters kann jede Haltemulde 14-1, 14-2 jedes Tubus 2-1 einen ersten, dem Okular 19 näher liegenden okularseitigen Endbereich und einen zweiten, dem Objektiv 18 näherliegenden objektivseitigen Endbereich aufweisen. Der Abstand zwischen den jeweiligen okularseitigen Endbereichen der Haltemulden 14-1, 14-2 der beiden Tuben 2-1, 2-2 ist kleiner als der Abstand zwischen den jeweiligen objektivseitigen Endbereichen der Haltemulden 14-1, 14-2 der beiden Tuben 2-1, 2-2. Jeder Tubus 2-1, 2-2 weist im Bereich seiner Taille 53 zwei einander gegenüberliegende, insbesondere zwei an um 180° zueinander gedrehten Abschnitten des Tubus 2-1, 2-2 angeordnete, Haltemulden 14-1, 14-2 auf. D.h. Haltemulden 14-1, 14-2 des binokularen Fernrohrs 1 sind bezüglich einer Drehung um 180° relativ zu den optischen Achsen 17-1, 17-2 zueinander versetzt.

Die Haltemulden 14-1, 14-2 der beiden Tuben 2-1, 2-2 können V-förmig aufeinander zulaufen, wobei eine Haltemulde 14-1, 14-2 eines ersten der beiden Tuben 2-1, 2-2 einen ersten Schenkel des V und eine Haltemulde 14-1, 14-2 eines zweiten der beiden Tuben 2-1, 2-2 einen zweiten Schenkel des V bildet (Fig. 1). Eine Spitze des V kann im Bereich des Fokussierknopfes 10 liegen. Alternativ können auch gedachte, eine Orientierung der Haltemulden 14-1, 14-2 beibehaltende Verlängerungen der Längserstreckungen 67-1, 67-2 der Haltemulden 14-1, 14-2 durch den Fokussierknopf 10 verlaufen, oder der Fokussierknopf 10 zwischen einer gedachten, die Orientierung der Haltemulden 14-1, 14-2 beibehaltenden Verlängerung der Längserstreckungen 67-1, 67-2 angeordnet sein.

Ein Wert eines senkrecht bezüglich der Ebene 22 gemessenen Durchmessers 54 der Taille 53 steht zu einem Wert eines Durchmessers 55 eines die Außenseite 52 des Tubus 2 umschreibend gedachten Zylindermantels 56 in einem Verhältnis von unter 80%, bevorzugt ca. 67 % (Fig. 11). Die Außenseiten 52 der beiden der Tuben 2-1, 2-2 sind vorzugsweise derart tailliert geformt, dass ein Verhältnis des Durchmessers 54 der Taille 53 zu dem entsprechenden Durchmesser 55 des die Außenseite 52 einhüllenden Zylindermantels 56 in einem Bereich zwischen 0,60 und 0,80 liegt (bzw. zwischen 60 % und 80 % liegt).

Anders gesagt, ein Querschnitt durch jeden der Tuben 2-1, 2-2 im Bereich der Taille 53, der normal zur ersten Ebene 22 und zur Richtung der optischen Achse 17-1, 17-2 ausgerichtet ist (entspricht Ebene 66), weist seine schmalste Stelle bezüglich einer zu der ersten Ebene 22 senkrechten Richtung auf (Fig. 9, 11). Ein Verhältnis einer lichten Höhe 69 der schmalsten Stelle des Tubus 2-1, 2-2 normal zur ersten Ebene 22 weist zu einem maximalen freien Durchmesser 70 des Objektivs 18 einen Wert von unter 80 %, insbesondere zwischen 60 % und 80 % auf. Wie weiter vorne - einleitend zur Figurenbeschreibung der Fig. 11 - schon erwähnt wurde, weist die Taille 53 eine von einer Kreisform abweichende Umfangsform auf. Daher haben Durchmesser der Tuben 2-1, 2-2 im Bereich der Taille 53, senkrecht bezüglich den optischen Achse 17-1, 17-2 gemessen, je nach Richtung - anders als bei einem Kreisquerschnitt - unterschiedliche Werte. D.h. der senkrecht bezüglich der Ebene 22 gemessene Durchmesser 54 der Taille 53 entspricht der schmalsten Stelle und in anderen Richtungen gemessene Durchmesser haben größer Werte.

Die Taillierung der Außenseiten 52 der Tuben 2-1, 2-2 ist insofern von Vorteil, als sie ein besonders bequemes und gleichzeitig sicheres Ergreifen und Festhalten des binokularen Fernrohrs 1 durch einen Benutzer ermöglicht.

Gemäß einem ersten Beispiel der Gestaltung der Außenseiten 52 der Tuben 2-1, 2-2 weißt der Durchmesser 55 einen Wert von 51,5 mm und der Durchmesser 54 der Taille 53 einen Wert von 35 mm auf. Der Wert des maximalen freien Durchmessers 70 des Objektivs 18 ist bei diesen Tuben 2-1, 2-2 42 mm und der Wert der lichten Höhe 69 der schmalsten Stelle 29 mm.

Ein zweites Ausführungsbeispiel der Tuben 2-1, 2-2 sieht als entsprechende Werte vor: Wert des Durchmessers 55 des die Außenseiten 52 des Tubus 2 umschreibend gedachten Zylindermantels 56 gleich 44,5 mm; Wert des Durchmessers 54 der Taille 53 gleich 33,5 mm; Wert des maximalen freien Durchmessers 70 des Objektiv 18 gleich 32 mm und Wert der lichten Höhe 69 der schmalsten Stelle des Tubus 25,5 mm.

Die entsprechenden Werte der beiden Beispiele sind in der nachfolgenden Tabelle übersichtlich zusammengefasst. Dabei sind in den Spalten 6 bis 9 dieser Tabelle zusätzlich Werte von charakteristischen Verhältnissen aus den Größen der Spalten 2 bis 5 angegeben.

| Beispiel | D55 [mm] | D54 [mm] | D69 [mm] | D70 [mm] | V54/55 | V54/70 | V69/70 | V(55-54)/70 |
|---|---|---|---|---|---|---|---|---|
| 1 | 51,5 | 35 | 29 | 42 | 0,68 | 0,83 | 0,69 | 0,39 |
| 2 | 44,5 | 33,5 | 25,5 | 32 | 0,75 | 1,05 | 0,80 | 0,34 |

| | | | | | | | | |
|---|---|---|---|---|---|---|---|---|
| Die Spaltenüberschriften in der Tabelle bedeuten dabei: D55: Durchmesser 55 des die Außenseite 52 des Tubus 2 umschreibend gedachten Zylindermantels 56; D54: Durchmesser 54 der Taille 53 senkrecht bezüglich der Ebene 22 gemessenen; D69: lichte Höhe 69 der schmalsten Stelle der Tuben 2-1, 2-2 senkrecht bezüglich der Ebene 22 gemessenen; D70: maximaler freier Durchmesser 70 des Objektivs 18; V54/55: Verhältnis von Durchmesser 54 zu Durchmesser 55; V54/70: Verhältnis von Durchmesser 54 zu Durchmesser 70; V69/70: Verhältnis von Durchmesser 69 zu Durchmesser 70; V(55-54)/70: Verhältnis der Differenz von Durchmesser 55 und Durchmesser 55 zum Durchmesser 70. | | | | | | | | |

Die äußere Gestalt der Tuben 2-1, 2-2 des binokularen Fernrohrs 1 wird besonders gut charakterisiert durch das Verhältnis der Differenz der beiden Durchmesser 55, 54 zu dem maximalen freien Durchmesser 70 des Objektivs 18 (Tabelle, Spalte 9). Der Wert dieses Verhältnisses liegt bei dem erfindungsgemäßen binokularen Fernrohr 1 in einem Bereich größer als 0,20, vorzugsweise in einem Bereich zwischen 0,30 und 0,60.

Im Übrigen seien an dieser Stelle auch Werte des Abstands 21, um den die erste optische Achse 17-1 des Objektivs 18 und die zweite optische Achse 17-2 des Okulars 19 relativ zueinander parallel versetzt sind, erwähnt. Im Beispiel 1 hat der Abstand 21 einen Wert von 3,2 mm und im Beispiel 2 einen Wert von 2,9 mm. Als vorteilhaft erweisen sich Werte des Abstands 21 aus einem Bereich von 2 mm bis 10 mm.

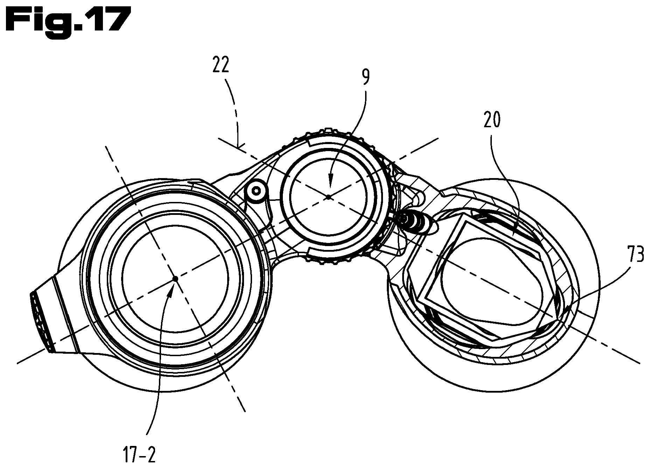

Diese Ausgestaltung der äußeren Form des binokularen Fernrohrs 1 bzw. der äußeren Form der Tubus-Gehäuse 57 wird auch dadurch begünstigt, dass gemäß diesem Ausführungsbeispiel auch eine besondere Ausbildung der Prismen des Prismen-Umkehrsystems 20 umgesetzt ist. Im Vergleich zu der theoretischen Grundform der beiden Prismen eines Schmidt-Pechan-Prismas, sind bei der gegenständlichen Ausbildung in radialer Richtung - bezüglich der optischen Achse 17-1, 17-2 - überstehende Ecken durch Abschrägungen ersetzt, wie am besten in Fig. 3, aber auch in Fig. 17, zu erkennen ist.

Die Fig. 12 zeigt einen Querschnitt des binokularen Fernrohrs 1 in reduzierter Darstellungsweise gemäß Fig. 9. Die dargestellten Teile des binokularen Fernrohrs 1 sind ebenso wie in Fig. 9 auf eine das Okular 19 repräsentierende Linse und die Fokussiervorrichtung 7 mit dem Fokussiergetriebe 11 und der Linsenfassung 26 der Fokussierlinse 6 (Fig. 3) beschränkt. Der in Fig. 12 dargestellte Querschnitt entspricht einer Schnittebene, die durch eine die Gelenkachse 4 (bzw. die Drehachse 9) und die Längsachse 15 der Schubstange 27 enthaltende Ebene 59 bestimmt ist. Die Schubstange 27 ist in Bezug auf die Gelenkachse 4 schräg ausgerichtet, wobei - gemäß diesem Ausführungsbeispiel - deren Längsachse 15 mit der Gelenkachse 4 einen spitzen Winkel 58 mit einem Wert von 7° einschließt. Der Wert des Winkels 58 ist vorzugsweise aus einem Bereich zwischen 0° und 30° gewählt. In Bezug auf die erste optische Achse 17-1 des Objektivs 18 als auch auf die zweite optische Achse 17-2 des Okulars 19 ist die Längsachse 15 allerdings in einer sogenannten windschiefen Lage angeordnet.

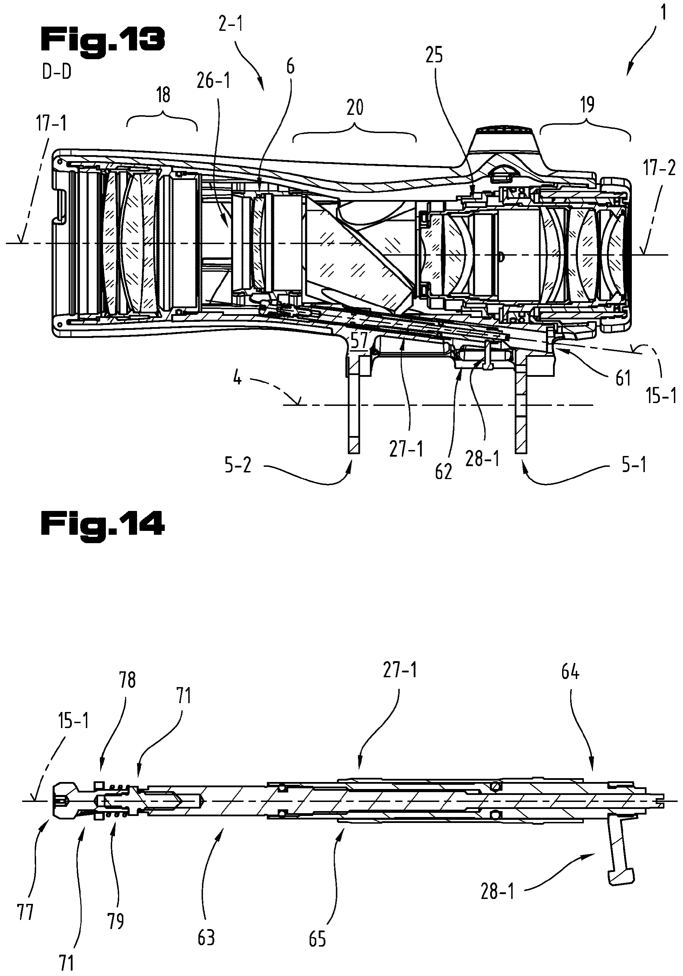

Die Anordnung der verschiedenen Achsen relativ zueinander ist besser in der Darstellung der Fig. 9 zu erkennen. Die Gelenkachse 4 spannt einerseits mit den optischen Achsen 17-1, 17-2 die gemeinsame Ebene 22 auf und andererseits gemeinsam mit der Längsachse 15 der Schubstange 27 die gemeinsame Ebene 59. Diese beiden Ebenen, das heißt die Ebene 22 und die Ebene 59, schließen miteinander einen Winkel 60 mit einem Wert aus einem Bereich zwischen 0° und 30°, insbesondere zwischen 10° und 30°, ein. In dem dargestellten Beispiel weist der Winkel 60 einen Wert von 12° auf. Diese Anordnung bzw. Ausrichtung der Schubstange 27 wird umgesetzt durch eine entsprechende Bohrung in dem Tubusgehäuse 57, die sich vom Bereich der Gelenkbrücke 5-1, 5-2 bzw. dem Bereich der Fokussiervorrichtung 7 zu der Linsenfassung 26 der Fokussierlinse 6 hin erstreckt (Fig. 13). Die Schubstange 27 ist somit in dem Tubusgehäuse 57 in Richtung ihrer Längsachse 15 hin und her verschiebbar.

Die Fig. 13 zeigt einen Querschnitt des ersten Tubus 2-1 des binokularen Fernrohrs 1 gemäß einer durch die Ebene 59 gebildeten Schnittebene. D.h. die Schnittebene enthält die Gelenkachse 4 und die Längsachse 15 der Schubstange 27-1 (Fig. 9). Wie vorstehend schon erwähnt, weist das Tubusgehäuse 57 eine Bohrung bzw. einen Führungstunnel 61 auf, in dem die Schubstange 27-1 gelagert ist. Der Führungstunnel 61 erstreckt sich demnach vom Inneren des Tubusgehäuses 57, im Bereich der Linsenfassung 26 der Fokussierlinse 6, bis in den Bereich der ersten Gelenkbrücke 5-1, wo er sich an einer okularseitigen Stirnseite der ersten Gelenkbrücke 5-1 nach außen hin öffnet. In dem Tubusgehäuse 57 ist außerdem zwischen dem Führungstunnel 61 und der Fokussiervorrichtung 7, in radialer Richtung auf die Gelenkachse hin gerichtet, ein Fenster 62 ausgebildet. Durch dieses Fenster 62 reicht der Mitnehmer 28-1 von der Schubstange 27-1 in das Gehäuse 8 der Fokussiervorrichtung 7 (Fig. 12). Die Anordnung der Schubstangen 27-1, 27-2 bei dem binokularen Fernrohrs 1 ist somit so vorgesehen, dass diese vom Inneren des Tubusgehäuses 57 bis in die erste Gelenkbrücke 5-1 verlaufen.

Die Ausbildung des binokularen Fernrohrs 1 mit den beschriebenen, schräg angeordneten Schubstangen 27 und den entsprechenden Führungstunneln 61 in den Tubusgehäusen 57 der Tuben 2-1, 2-2 bietet insbesondere bei der Montage des binokularen Fernrohrs 1 die Möglichkeit, dass damit auf einfache Weise eine Justierung der Fokussiereinrichtung vorgenommen werden kann. Ein solches Justieren ist möglich, indem mit einem geeigneten Werkzeug durch das okularseitige Ende des Führungstunnels 61 auf den okularseitigen Endbereich der Schubstange 27 eingewirkt wird. Die Schubstangen 27 sind nämlich, wie nachstehend anhand der Fig. 14 noch beschrieben wird, teleskopartig in ihrer Länge verstellbar. Bei der Montage des binokularen Fernrohrs 1 kann somit sowohl für die Fokussierung als auch für den Dioptrieausgleich eine mittlere Grundstellung für die benötigten Verstellbereiche vorgenommen werden.

Die Fig. 14 zeigt die Schubstange 27-1 dargestellt als Längsschnitt bezüglich ihrer Längsachse 15-1. Die Schubstangen 27-1, 27-1 sind bevorzugt gerade ausgebildet. Die Schubstange 27-1 umfasst als Hauptkomponenten eine Innenstange 63 und eine Schubhülse 64. In der Fig. 14 ist zusätzlich auch noch eine Gleitbuchse 65 dargestellt, durch die die Schubstange 27-1 in dem Führungstunnel 61 gelagert wird. Die Innenstange 63 und die Schubhülse 64 sind bevorzugt mit ineinandergreifenden Gewinden ausgebildet und können so in ihrer relativen Lange zueinander in Richtung der Längsachse 15-1 verstellt werden. An einem okularseitigen Ende der Schubhülse 64 ist der Mitnehmer 28-1 befestigt. Andererseits ist ein objektivseitiges Ende der Innenstange 63 mit einer Gelenkkopfanordnung 71 ausgebildet. Diese Gelenkkopfanordnung 71 steht ihrerseits mit einer Gelenkpfanne 72 der Linsenfassung 26 der Fokussierlinse 6 in Eingriff. Gemäß diesem Ausführungsbespiel ist die Gelenkpfanne 72 durch eine seitlich von der Linsenfassung 26 der Fokussierlinse 6 abstehende Gabel ausgebildet (siehe auch Fig. 9, 12). Bei einer Verstellung der Schubstange 27-1 in Richtung der Längsachse 15-1 ist so eine Ausgleichsbewegung in radialer Richtung zwischen der Gelenkkopfanordnung 71 und der gabelförmig ausgebildeten Gelenkpfanne 72 möglich. Die Gelenkkopfanordnung 71 ist vorzugsweise auch mit einem vorgespannten Federelement und einer Scheibe ausgebildet, durch die nach beiden Verstell-Richtungen eine spielfreie Anlage zwischen entsprechenden Anlageseiten der Gelenkpfanne 72 und der Gelenkkopfanordnung 71 andererseits erreicht wird. Für die Übertragung von Bewegungen von dem Fokussierknopf 10 zu der Fokussierlinse 6 kann also insgesamt mechanische Spielfreiheit erzielt wird.

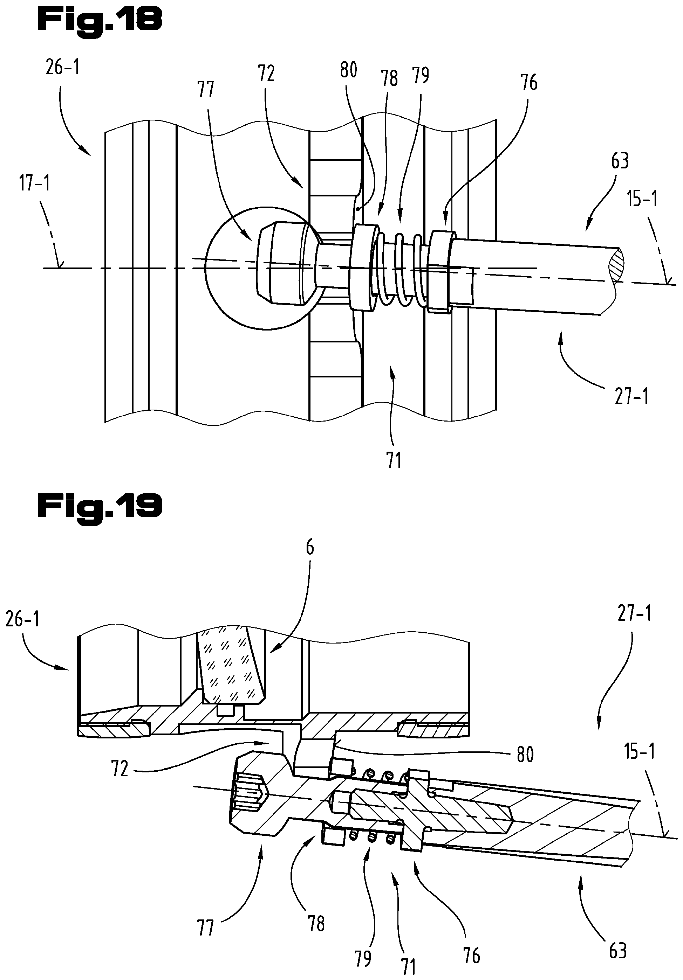

Die Ankopplung bzw. den wechselseitigen Eingriff der Schubstange 27 und der Linsenfassung 26 der Fokussierlinse 6 wird anhand der Fig. 18 und 19 näher ausgeführt. Die Fig. 18 zeigt ein Detail der Linsenfassung 26 mit der Gelenkkopfanordnung 71 der Schubstange 27 gemäß Fig. 12. Die Darstellung entspricht einer seitlichen Draufsicht auf die Linsenfassung 26 entsprechend einer Blickrichtung parallel zur Schnittebene "XIX-XIX" wie in Fig. 9 angezeigt.

Die Fig. 19 zeigt einen Querschnitt entsprechend einer die optische Achse 17-1 enthaltenen Schnittebene mit der Fokussierlinse 6, der Gelenkpfanne 72 der Linsenfassung 26 und der Gelenkkopfanordnung 71 der Schubstange 27. Die Gelenkkopfanordnung 71 ist mittels einer Gelenkkopfbasis 76 an der Innenstange 63 der Schubstange 27 befestigt. Dazu ist die Gelenckopfbasis 76 in das objektivseitige Ende der Innenstange 63 geschraubt. Andererseits ist ein zylinderförmiger Abschnitt eines Gelenkkopfs 77 an der Gelenkkopfbasis 76 befestigt. An dem zylinderförmigen Abschnitt des Gelenkkopfs 77 ist andererseits eine Gleitscheibe 78 und eine Druckfeder 79 gelagert. Dabei ist die Druckfeder 79 derart angeordnet, dass sie sich einerseits an der Gleitscheibe 78 und andererseits an einem scheibenförmigen Vorsprung der Gelenkkopfbasis 76 abstützt. Die Druckfeder 79 ist in vorgespanntem Zustand eingebaut und wird auf diese Weise die gabelförmig ausgebildete Gelenkpfanne 72 der Linsenfassung 26 der Fokussierlinse 6 zwischen der Gleitscheibe 78 und dem Gelenkkopf 77 eingeklemmt bzw. eingespannt. Die Übertragung einer Bewegung von der Schubstange 27 auf die Linsenfassung 26 der Fokussierlinse 6 kann somit frei von mechanischem Spiel erfolgen. Andererseits ist bei einer Verstellung der Linsenfassung 26 eine radiale - bezüglich der optischen Achse 17-1 - Ausgleichsbewegung des Gelenkkopfs 77 in der Gelenkpfanne 72 möglich. Bei der Ausformung der Gelenkpfanne 72 der Linsenfassung 26 ist außerdem vorgesehen, dass eine okularseitige bzw. eine der Gleitscheibe 78 zugewandte Flanke 80 eine der Längsachse 15 der Schubstange 27 entsprechende Neigung bzw. Schrägstellung aufweist. Dadurch kann eine annähernd vollflächige Anlage der Gleitscheibe 78 an der Flanke 80 der Gelenkpfanne 72 erreicht werden. Insbesondere wird vermieden, dass es zu einem Verklemmen der Gleitscheibe 78 an dem zylinderförmigen Abschnitt des Gelenkkopfs 77 kommt.

Bei der Innenstange 63 und der Schubhülse 64 der Schubstange 27-1 ist außerdem vorgesehen, dass die Innenstange 63 in Richtung der Längsachse 15-1 durch die Schubhülse 64 hindurchreicht und daraus - über den okularseitigen Endbereich hinaus - hervorsteht. Ein Schlitz in dem okularseitigen Endbereich der Innenstange 63 ermöglich das Einwirken beispielsweise eines Schraubenziehers, mit dem eine Längenveränderung bzw. eine Justage-Einstellung an der Schubstange 27-1 vorgenommen werden kann.

Wie anhand einer Zusammenschau der Fig. 10 und der Fig. 17 zu erkennen ist, weist der Tubus 2-1 in einem Querschnitt des Tubus 2-1 entsprechend der ersten Ebene 22 in einem das Prismen-Umkehrsystem 20 abdeckenden Abschnitt (in einem mit dem Prismen-Umkehrsystem 20 überlappenden Längsbereich) den größten Abstand zwischen einander gegenüberliegenden Innenseiten und somit seine breiteste Stelle auf. Ein Querschnitt normal zur ersten Ebene 22 und zur Richtung der optischen Achse durch den Tubus 2-1 im Bereich der Taille 53 weist somit seine breiteste Stelle in einem Schnittbereich des Tubus 2-1 mit der ersten Ebene 22 auf. Diese "breiteste Stelle", von der hier die Rede ist, entspricht der vorstehend schon erwähnten "schmalsten Stelle", wie in Fig. 11 dargestellt (entsprechend Ebene 66).

Eine Spitze 73 einer Dachkante 74 des Prismen-Umkehrsystems 20 ist in einem Bereich der breitesten Stelle und nach außen weisend angeordnet (Fig. 10). Der kürzeste Abstand zwischen dieser Spitze 73 der Dachkante 74 und der Innenwand des Tubus 2-1 ist dabei kleiner als der kürzeste Abstand zwischen Spitze 73 der Dachkante 74 und der optischen Achse 17-1 des Objektivs 18 und/oder zur optischen Achse 17-2 des Okulars 19.

Die Spitze 73 der Dachkante 74 des Prismen-Umkehrsystems 20 ist somit im Bereich der breitesten Stelle und nach außen weisend angeordnet, sodass der kürzeste Abstand zwischen Spitze 73 der Dachkante 74 und Innenwand des Tubus 2-1 kleiner ist als der kürzeste Abstand zwischen Spitze 73 der Dachkante 74 und einer der Spitze 73 der Dachkante 74 gegenüberliegenden Fläche 75 des Prismen-Umkehrsystems 20.

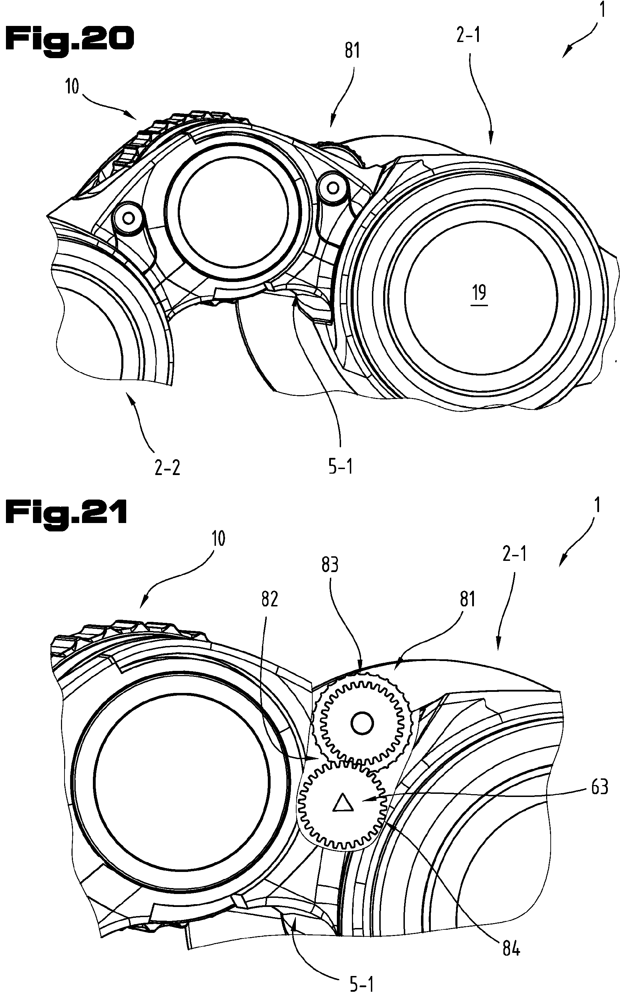

Anhand der nachfolgenden Fig. 20 und 21 wird ein alternatives Ausführungsbeispiel einer Einrichtung zum Dioptrienausgleich bei dem binokularen Fernrohr 1 beschrieben. Die Fig. 20 zeigt ein Detail gemäß einer Draufsicht auf den okularseitigen Endbereich des binokularen Fernrohrs 1. Die Darstellung entspricht dabei einer Blickrichtung auf das binokulare Fernrohr 1 parallel zu der Längsachse 15 der Schubstange 27 (Fig. 12). Bei diesem Ausführungsbeispiel der Einrichtung zum Dioptrienausgleich ist ein Dioptriering 81, der asymmetrisch zu der Gelenkachse 4 der Tuben 2-1, 2-2 des Fernrohrs 1 angeordnet ist, vorgesehen. Dieser Dioptriering 81 ist in einem Bereich zwischen der Gelenkachse 4 und dem ersten Tubus 2-1 angeordnet. Er ist insbesondere im Bereich der ersten Gelenkbrücke 5-1 und dabei insbesondere nahe am okularseitigen Endbereich der Schubstange 27-1 positioniert (Fig. 1, 12).

Die Fig. 21 zeigt ein Detail der Gelenkbrücke 5-1 des Fernrohrs 1 mit dem Dioptriering 81 teilweise geschnitten dargestellt. Die Darstellung entspricht wiederum einer Blickrichtung parallel zu der Längsachse 15 der ersten Schubstange 27-1. Zwischen dem Dioptriering 81 und der Innenstange 63 der Schubstange 27-1 ist gemäß diesem Ausführungsbeispiel des Fernrohrs 1 ein Dioptriegetriebe 82 vorgesehen. Dieses ist in diesem Ausführungsbeispiel durch ein Zahnradgetriebe ausgebildet. Dazu ist mit dem Dioptriering 81 ein erstes Zahnrad 83 verbunden und wird eine Betätigung des Dioptrierings 81 damit auf ein zweites Zahnrad 84 übertragen. Zwischen dem zweiten Zahnrad 84 und dem okularseitigen Endbereich der Innenstange 63 ist eine sogenannte Hülsenkupplung ausgebildet. Das heißt, das zweite Zahnrad 84 greift formschlüssig an dem Ende der Innenstange 63 an, sodass eine Drehbewegung auf die Innenstange 63 übertragen wird. Gemäß diesem Ausführungsbeispiel ist das Ende der Innenstange 63 mit einem Dreiecksprofil ausgebildet. Das zweite Zahnrad 84 ist mit der Innenstange 63 aber nicht fest verbunden, sondern kann sich die Innenstange 63 relativ zu dem Zahnrad 84 in Richtung der Längsachse 15-1 bewegen. Wegen des andererseits zwischen der Schubhülse 64 und der Innenstange 63 ausgebildeten Gewindes erfolgt bei einer Verdrehung des Zahnrads 84 eine zusätzliche axiale Verschiebung der Innenstange 63 mit der Gelenckopfanordnung 71 in Richtung der Längsachse 15-1. Der Dioptriering 81 und die Zahnräder 83, 84 des Dioptriegetriebes 82 werden dabei nicht in Richtung der Längsachse 15-1 verschoben. Andererseits bleibt auch ein Betätigen des Fokussierknopfs 10 und damit eine axiale Verschiebung der gesamten Schubstange 27-1 ohne eine Wechselwirkung auf die Einstellung des Dioptrierings 81 bzw. des Dioptriegetriebes 82.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Fernrohr | 31 | Kontermutter |
| 2 | Tubus | 32 | Innenhülse |
| 3 | Augenabstand | 33 | Stellscheibe (vordere) |
| 4 | Gelenkachse | 34 | Stellscheibe (hintere) |
| 5 | Gelenkbrücke | 35 | Mitnehmerkopf |
| 6 | Fokussierlinse | 36 | Druckfeder |
| 7 | Fokussiervorrichtung | 37 | Achshülse |
| 8 | Gehäuse | 38 | Schlitz |
| 9 | Drehachse | 39 | Führungsstift |
| 10 | Fokussierknopf | 40 | Gewinde |
| 11 | Fokussiergetriebe | 41 | Innengewinde |
| 12 | Gewindespindel | 42 | Antriebsbuchse |
| 13 | Anschlag | 43 | Anschlagelement |
| 14 | Haltemulde | 44 | Nut |
| 15 | Längsachse | 45 | Translation |
| 16 | | 46 | Rotation |
| 17 | optische Achse | 47 | Mitnehmerarm |
| 18 | Objektiv | 48 | Ausnehmung |
| 19 | Okular | 49 | Führungsbahn |
| 20 | Prismen-Umkehrsystem | 50 | Schlitz |
| 21 | Abstand | 51 | Fenster |
| 22 | Ebene | 52 | Außenseite |
| 23 | Dioptriering | 53 | Taille |
| 24 | optisches System | 54 | Durchmesser |
| 25 | Feldlinse | 55 | Durchmesser |
| 26 | Linsenfassung | 56 | Zylindermantel |
| 27 | Schubstange | 57 | Tubusgehäuse |
| 28 | Mitnehmer | 58 | Winkel |
| 29 | Gelenkachse | 59 | Ebene |
| 30 | Achsmutter | 60 | Winkel |
| 61 | Führungstunnel | | |
| 62 | Fenster | | |
| 63 | Innenstange | | |
| 64 | Schubhülse | | |
| 65 | Gleitbuchse | | |
| 66 | Ebene | | |
| 67 | Längsrichtung | | |
| 68 | Winkel | | |
| 69 | lichte Höhe | | |
| 70 | freier Durchmesser | | |
| 71 | Gelenkkopfanordnung | | |
| 72 | Gelenkpfanne | | |
| 73 | Spitze | | |
| 74 | Dachkante | | |
| 75 | Fläche | | |
| 76 | Gelenkkopfbasis | | |
| 77 | Gelenkkopf | | |
| 78 | Gleitscheibe | | |
| 79 | Druckfeder | | |
| 80 | Flanke | | |
| 81 | Dioptriering | | |
| 82 | Dioptriegetriebe | | |
| 83 | Zahnrad | | |
| 84 | Zahnrad | | |

## Patentansprüche

1. Binokulares Fernrohr (1) mit zwei Tuben (2), die zur Einstellung des Augenabstands (3) durch eine um eine Gelenkachse (4) schwenkbare Gelenkbrücke (5) miteinander verbunden sind, wobei in den beiden Tuben (2) jeweils ein Strahlengang mit einer ersten optischen Achse (17) eines Objektivs (18), mit einer zweiten optischen Achse (17) eines Okulars (19) und mit einem Prismen-Umkehrsystem (20) ausgebildet ist, wobei eine Außenseite (52) jedes Tubus (2) in einem Bereich des Prismen-Umkehrsystems (20) eine mit einer von einer Kreisform abweichenden Umfangsform ausgebildete Taille (53) aufweist, **dadurch gekennzeichnet, dass**
- an einer Oberseite des Tubus (2) eine erste Haltemulde (14-1), die der Taille (53) folgt, für einen Abschnitt eines Fingers ausgebildet ist
- und an einer Unterseite des Tubus (2) eine zweite Haltemulde (14-2), die der Taille (53) folgt, für einen Abschnitt eines Daumens eines Benutzers ausgebildet ist.

2. Fernrohr nach Anspruch 1, **dadurch gekennzeichnet, dass** eine Längsrichtung (67) der auf der Oberseite und/oder eine Längsrichtung (67) der auf der Unterseite verlaufenden Haltemulde (14-1, 14-2) mit einer Richtung der optischen Achse (17) einen Winkel (68) zwischen 35° und 90° einschließt.

3. Fernrohr nach Anspruch 1 oder 2, **dadurch gekennzeichnet, dass** die erste optische Achse (17-1) des Objektivs (18) und die zweite optische Achse (17-2) des Okulars (19) um einen Abstand (21) zueinander parallel versetzt sind, sodass diese Achsen (17-1, 17-2) nicht zusammenfallen, wobei die erste optische Achse (17-1) des Objektivs (18) und die zweite optische Achse (17-2) des Okulars (19) sowie die Gelenkachse (4) in einer gemeinsamen ersten Ebene (22) liegen.

4. Fernrohr nach Anspruch 3, **dadurch gekennzeichnet, dass** Außenseiten (52) der beiden Tuben (2) jeweils die Taille (53) im Bereich des Prismen-Umkehrsystems (20) in einer bezüglich der Ebene (22) senkrechten Richtung aufweisen.

5. Fernrohr nach einem der Ansprüche 1 bis 4, **dadurch gekennzeichnet, dass** ein Querschnitt normal zur Richtung der optischen Achse (17) durch jeden der Tuben (2) im Bereich der Taille (53) seine schmalste Stelle in einem Schnittbereich des jeweiligen Tubus (2) mit einer normal zur Richtung der ersten optischen Achse des Objektivs verlaufenden Ebene aufweist, wobei ein Verhältnis eines Durchmessers (54) der schmalsten Stelle des Tubus (2) zu einem Durchmesser (55) des Gehäuses im Bereich des Objektivs einen Wert, der kleiner ist als 0,80, insbesondere einen Wert zwischen 0,60 und 0,80 aufweist.

6. Fernrohr nach einem der Ansprüche 1 bis 5, **dadurch gekennzeichnet, dass** ein Verhältnis aus einer Differenz eines Durchmessers (55) eines im Bereich des Objektivs (18) die Außenseite (52) des Tubus (2) umschreibend gedachten Zylindermantels (56) und eines Durchmessers (54) der schmalsten Stelle der Taille (53) zu einem maximalen freien Durchmesser (70) des Objektivs (18) einen Wert hat, der größer ist als 0,20, vorzugsweise das Verhältnis einen Wert hat, der in einem Bereich zwischen 0,30 und 0,60 liegt.

7. Fernrohr nach einem der Ansprüche 1 bis 6, **dadurch gekennzeichnet, dass** die Haltemulden (14-1, 14-2) quer zur Längsrichtung (67) der Taille (53) jeweils einen konkaven Querschnitt aufweisen.

8. Fernrohr nach einem der Ansprüche 1 bis 7, **dadurch gekennzeichnet, dass** eine Richtung einer Längserstreckung (67) jeder Haltemulde (14-1, 14-2) schräg zur Richtung einer Längserstreckung des Tubus (2) verläuft.

9. Fernrohr nach einem der Ansprüche 1 bis 8, **dadurch gekennzeichnet, dass** jede Haltemulde (14-1, 14-2) jedes Tubus (2) einen ersten, dem Okular (19) näher liegenden okularseitigen Endbereich und einen zweiten, dem Objektiv (18) näherliegenden objektivseitigen Endbereich aufweist, wobei der Abstand zwischen den jeweiligen okularseitigen ersten Endbereichen der Haltemulden (14) der beiden Tuben (2) kleiner ist als der Abstand zwischen den jeweiligen objektivseitigen zweiten Endbereichen der konkaven Abschnitte der beiden Tuben (2).

10. Fernrohr nach einem der Ansprüche 1 bis 9, **dadurch gekennzeichnet, dass** jeder Tubus (2) im Bereich seiner Taille (53) zwei einander gegenüberliegende, insbesondere diametral gegenüberliegende, Haltemulden (14-1, 14-2) aufweist.

11. Fernrohr nach einem der Ansprüche 1 bis 10, **dadurch gekennzeichnet, dass** die Haltemulden (14-1, 14-2) der beiden Tuben (2) V-förmig aufeinander zulaufen, wobei eine Haltemulde eines ersten der beiden Tuben (2-1) einen ersten Schenkel des "V" und eine Haltemulde eines zweiten der beiden Tuben (2-2) einen zweiten Schenkel des "V" bildet.

12. Fernrohr nach einem der Ansprüche 1 bis 11, **dadurch gekennzeichnet, dass** in den beiden Tuben (2) jeweils ein axial verschiebbares Fokussiermittel (6) angeordnet ist und eine gemeinsamen Fokussiervorrichtung (7) zum Verschieben der Fokussiermittel (6) ausgebildet ist, wobei die Fokussiervorrichtung einen um eine Drehachse (9) drehbaren Fokussierknopf (10) umfasst.

13. Fernrohr nach Anspruch 11 und 12, **dadurch gekennzeichnet, dass** eine Spitze des "V" im Bereich des Fokussierknopfes (10) liegt, oder dass eine gedachte, eine Orientierung der Haltemulden beibehaltenden Verlängerung der Längserstreckungen (67) der Haltemulden (14-1, 14-2) durch den Fokussierknopf (10) verläuft, oder dass der Fokussierknopf (10) zwischen einer gedachten, die Orientierung der Haltemulden beibehaltenden Verlängerung der Längserstreckungen (67) angeordnet ist.

14. Fernrohr nach einem der Ansprüche 1 bis 13, **dadurch gekennzeichnet, dass** ein Querschnitt normal zur ersten Ebene (22) und zur Richtung der optischen Achse durch jeden der Tuben im Bereich seiner Taille (53) seine breiteste Stelle in einem Schnittbereich des Tubus (2) mit der ersten Ebene (22) aufweist.

15. Fernrohr nach Anspruch 14, **dadurch gekennzeichnet, dass** eine Spitze einer Dachkante (74) des Prismen-Umkehrsystems (20) in Bereich der breitesten Stelle und nach außen weisend angeordnet ist, wobei der kürzeste Abstand zwischen Spitze der Dachkante und Innenwand des Tubus (2) kleiner ist als der kürzeste Abstand zwischen Spitze der Dachkante und einer der Spitze der Dachkante gegenüberliegenden Fläche (75) des Prismen-Umkehrsystems (20).

16. Fernrohr nach einem der Ansprüche 1 bis 15, **dadurch gekennzeichnet, dass** das Prismen-Umkehrsystem (20) ein Schmidt-Pechan-Prismensystem umfasst.

17. Fernrohr nach einem der Ansprüche 1 bis 16, **dadurch gekennzeichnet, dass** eine durch die Haltemulde (14-1) an der Oberseite des Tubus und eine durch die Haltemulde (14-2) an der Unterseite des Tubus (2) verlaufende zweite Ebene (66) durch das Prismen-Umkehrsystem (20) verläuft.

## Claims

1. A binocular (1) having two tubes (2), which are connected to one another by means of a hinged bridge (5) pivotable about a hinge axis (4) for adjusting the interpupillary distance (3), wherein in the two tubes (2), in each case, a beam path is formed with a first optical axis (17) of an objective lens (18), with a second optical axis (17) of an eyepiece (19) and with a prism erecting system (20), wherein an outer side (52) of each tube (2) has a waist (53) formed with a circumferential shape deviating from a circular shape in a region of the prism erecting system (20), **characterized in that**
- a first retaining recess (14-1) following the waist (53) is formed on an upper side of the tube (2) for a section of a finger,
- and a second retaining recess (14-2) following the waist (53) is formed on a bottom side of the tube (2) for a section of a thumb of a user.

2. The binocular according to claim 1, **characterized in that** a longitudinal direction (67) of the retaining recess (14-1, 14-2) extending on the upper side and/or a longitudinal direction (67) of the retaining recess (14-1, 14-2) extending on the bottom side encloses an angle (68) of between 35° and 90° with a direction of the optical axis (17).

3. The binocular according to claim 1 or 2, **characterized in that** the first optical axis (17-1) of the objective lens (18) and the second optical axis (17-2) of the eyepiece (19) are offset parallel to each other by a distance (21) so that these axes (17-1, 17-2) do not coincide, wherein the first optical axis (17-1) of the objective lens (18) and the second optical axis (17-2) of the eyepiece (19) as well as the hinge axis (4) lie in a common first plane (22).

4. The binocular according claim 3, **characterized in that** the outer sides (52) of the two tubes (2) each comprise the waist (53) in the region of the prism erecting system (20) in a direction perpendicular with respect to the plane (22).

5. The binocular according to one of claims 1 to 4, **characterized in that** a cross-section normal to the direction of the optical axis (17) through each of the tubes (2) in the region of the waist (53) has its narrowest part in an intersection area of the respective tube (2) with a plane extending normal to the direction of the first optical axis of the objective lens, wherein a ratio of a diameter (54) of the narrowest part of the tube (2) to a diameter (55) of the housing in the area of the objective lens has a value which is lower than 0.80, in particular has a value amounting to between 0.60 and 0.80.

6. The binocular according to one of claims 1 to 5, **characterized in that** a ratio of a difference of a diameter (55) of an imaginary cylinder jacket (56) circumscribing the outer side (52) of the tube (2) in the region of the objective lens (18) and a diameter (54) of the narrowest part of the waist (53) to a maximum free diameter (70) of the objective lens (18) has a value larger than 0.20, preferably the ratio has a value in a range of between 0.30 and 0.60.

7. The binocular according to one of claims 1 to 6, **characterized in that** the retaining recesses (14-1, 14-2) each have a concave cross-section transversely to the longitudinal direction (67) of the waist (53).

8. The binocular according to one of claims 1 to 7, **characterized in that** a direction of a longitudinal extent (67) of each retaining recess (14-1, 14-2) extends obliquely to the direction of a longitudinal extent of the tube (2).

9. The binocular according to one of claims 1 to 8, **characterized in that** each retaining recess (14-1, 14-2) of each tube (2) has a first eyepiece-side end region located closer to the eyepiece (19) and a second objective-side end region located closer to the objective lens (18), wherein the distance between the respective eyepiece-side, first end regions of the retaining recesses (14) of the two tubes (2) is smaller than the distance between the respective objective-side, second end regions of the concave sections of the two tubes (2).

10. The binocular according to one of claims 1 to 9, **characterized in that** each tube (2) has two opposing, in particular diametrically opposing, retaining recesses (14-1, 14-2) in the region of its waist (53).

11. The binocular according to one of claims 1 to 10, **characterized in that** the retaining recesses (14-1, 14-2) of the two tubes (2) taper towards one another in a V-shape, wherein a retaining recess of a first one of the two tubes (2-1) forms a first limb of the "V" and a retaining recess of a second one of the two tubes (2-2) forms a second limb of the "V".

12. The binocular according to one of claims 1 to 11, **characterized in that** an axially displaceable focusing means (6) is arranged in each one of the two tubes (2) and a common focusing device (7) for displacing the focusing means (6) is formed, wherein the focusing device comprises a focusing knob (10) rotatable about a rotational axis (9).

13. The binocular according to claims 11 and 12, **characterized in that** a tip of the "V" is located in the region of the focusing knob (10), or that an imaginary extension of the longitudinal extents (67) of the retaining recesses (14-1, 14-2) keeping an orientation of the retaining recesses extends through the focusing knob (10), or that the focusing knob (10) is arranged between an imaginary extension of the longitudinal extents (67) keeping the orientation of the retaining recesses.

14. The binocular according to one of claims 1 to 13, **characterized in that** a cross-section normal to the first plane (22) and to the direction of the optical axis through each one of the tubes in the region of their waists (53) has its widest part in an intersection area of the tube (2) with the first plane (22).

15. The binocular according to claim 14, **characterized in that** a tip of a roof edge (74) of the prism erecting system (20) is arranged in the region of the widest part and facing outwards, wherein the shortest distance between the tip of the roof edge and the inner wall of the tube (2) is smaller than the shortest distance between the tip of the roof edge and a surface (75) of the prism erecting system (20) opposite the tip of the roof edge.

16. The binocular according to one of claims 1 to 15, **characterized in that** the prism erecting system (20) comprises a Schmidt-Pechan prism system.

17. The binocular according to one of claims 1 to 16, **characterized in that** a second plane (66) extending through the retaining recess (14-1) at the upper side of the tube and through the retaining recess (14-2) at the bottom side of the tube (2) extends through the prism erecting system (20).

## Revendications

1. Télescope binoculaire (1) avec deux tubes (2) qui sont reliés entre eux pour le réglage de la distance interoculaire (3) par un pont articulé (5) pivotant autour d'un axe d'articulation (4), un trajet optique étant formé dans les deux tubes (2) respectivement par un premier axe optique (17) d'un objectif (18), un deuxième axe optique (17) d'un oculaire (19) et un système d'inversion à prisme (20), une face extérieure (52) de chaque tube (2) présentant, dans une zone du système d'inversion à prisme (20), une taille (53) de forme périphérique s'écartant d'une forme circulaire, **caractérisé en ce que**
- une première cavité de retenue (14-1) qui suit la taille (53) est formée sur une face supérieure du tube (2) pour une partie d'un doigt
- et une deuxième cavité de retenue (14-2) qui suit la taille (53) est formée sur une face inférieure du tube (2) pour une partie du pouce d'un utilisateur.

2. Télescope selon la revendication 1, **caractérisé en ce qu'**une direction longitudinale (67) de la cavité de retenue (14-1, 14-2) s'étendant sur la face supérieure et/ou une direction longitudinale (67) s'étendant sur la face inférieure forme un angle (68) compris entre 35° et 90° avec une direction de l'axe optique (17).

3. Télescope selon la revendication 1 ou 2, **caractérisée en ce que** le premier axe optique (17-1) de l'objectif (18) et le deuxième axe optique (17-2) de l'oculaire (19) sont décalés parallèlement l'un par rapport à l'autre d'une distance (21) telle que ces axes (17-1, 17-2) ne coïncident pas, le premier axe optique (17-1) de l'objectif (18) et le deuxième axe optique (17-2) de l'oculaire (19) ainsi que l'axe d'articulation (4) se trouvant dans un premier plan commun (22).

4. Télescope selon la revendication 3, **caractérisé en ce que** les faces extérieures (52) des deux tubes (2) présentent chacune la taille (53) dans la zone du système d'inversion à prisme (20) dans une direction perpendiculaire au plan (22).

5. Télescope selon l'une des revendications 1 à 4, **caractérisé en ce qu'**une section transversale perpendiculaire à la direction de l'axe optique (17) passant par chacun des tubes (2) dans la zone de la taille (53) présente son point le plus étroit dans une zone de coupe du tube respectif (2) avec un plan perpendiculaire à la direction du premier axe optique de l'objectif, le rapport entre le diamètre (54) du point le plus étroit du tube (2) et le diamètre (55) du boîtier dans la zone de l'objectif présentant une valeur inférieure à 0,80, en particulier une valeur comprise entre 0,60 et 0,80.

6. Télescope selon l'une des revendications 1 à 5, **caractérisé en ce qu'**un rapport entre la différence entre le diamètre (55) d'une enveloppe cylindrique (56) imaginée dans la zone de l'objectif (18) et circonscrivant la face extérieure (52) du tube (2) et un diamètre (54) de la partie la plus étroite de la taille (53) et un diamètre libre maximal (70) de l'objectif (18) a une valeur supérieure à 0,20, le rapport ayant de préférence une valeur comprise entre 0,30 et 0,60.

7. Télescope selon l'une des revendications 1 à 6, **caractérisé en ce que** les cavités de retenue (14-1, 14-2) présentent chacune une section transversale concave perpendiculairement à la direction longitudinale (67) de la taille (53).

8. Télescope selon l'une des revendications 1 à 7, **caractérisé en ce qu'**une direction d'une extension longitudinale (67) de chaque cavité de retenue (14-1, 14-2) s'étend obliquement par rapport à la direction d'une extension longitudinale du tube (2).

9. Télescope selon l'une des revendications 1 à 8, **caractérisé en ce que** chaque cavité de retenue (14-1, 14-2) de chaque tube (2) présente une première zone d'extrémité côté oculaire, plus proche de l'oculaire (19), et une deuxième zone d'extrémité côté objectif (18), la distance entre les premières zones d'extrémité côté oculaire respectives des cavités de retenue (14) des deux tubes (2) étant inférieure à la distance entre les deuxièmes zones d'extrémité côté objectif respectives des parties concaves des deux tubes (2).

10. Télescope selon l'une des revendications 1 à 9, **caractérisé en ce que** chaque tube (2) présente, dans la zone de sa taille (53), deux cavités de retenue (14-1, 14-2) opposées l'une à l'autre, en particulier diamétralement opposées.

11. Télescope selon l'une des revendications 1 à 10, **caractérisé en ce que** les cavités de retenue (14-1, 14-2) des deux tubes (2) convergent en forme de V, une cavité de retenue d'un premier des deux tubes (2-1) formant une première branche du « V » et une cavité de retenue d'un deuxième des deux tubes (2-2) formant une deuxième branche du « V ».

12. Télescope selon l'une des revendications 1 à 11, **caractérisé en ce qu'**un moyen de mise au point (6) déplaçable axialement est agencé dans chacun des deux tubes (2) et **en ce qu'**un dispositif de mise au point commun (7) est formé pour déplacer les moyens de mise au point (6), le dispositif de mise au point comprenant un bouton de mise au point (10) pouvant tourner autour d'un axe de rotation (9).

13. Télescope selon les revendications 11 et 12, **caractérisé en ce qu'**une pointe du « V » se trouve dans la zone du bouton de mise au point (10), ou **en ce qu'**un prolongement imaginaire des extensions longitudinales (67) des cavités de retenue (14-1, 14-2) s'étend à travers le bouton de mise au point (10), ou **en ce que** le bouton de mise au point (10) est agencé entre un prolongement imaginaire des extensions longitudinales (67) conservant l'orientation des cavités de retenue.

14. Télescope selon l'une des revendications 1 à 13, **caractérisé en ce qu'**une section transversale perpendiculaire au premier plan (22) et à la direction de l'axe optique à travers chacun des tubes dans la zone de sa taille (53) présente son point le plus large dans une zone de coupe du tube (2) avec le premier plan (22).

15. Télescope selon la revendication 14, **caractérisé en ce qu'**une pointe d'un bord de toit (74) du système d'inversion à prisme (20) est agencée dans la zone de la partie la plus large et vers l'extérieur, la distance la plus courte entre la pointe du bord du toit et la paroi intérieure du tube (2) étant inférieure à la distance la plus courte entre la pointe du bord du toit et une surface (75) du système d'inversion à prisme (20) opposée à la pointe du bord du toit.

16. Télescope selon l'une des revendications 1 à 15, **caractérisé en ce que** le système d'inversion à prisme (20) comprend un système de prismes Schmidt-Pechan.

17. Télescope selon l'une des revendications 1 à 16, **caractérisé en ce qu'**un deuxième plan (66) s'étendant à travers la cavité de retenue (14-1) sur la face supérieure du tube et à travers la cavité de retenue (14-2) sur la face inférieure du tube (2) s'étend à travers le système d'inversion à prisme (20).
